# EUROPEAN PATENT APPLICATION

(11) **EP 4 792 999 A1**
(43) Date of publication of application: **19.08.2026**
(21) Application number: 26157761.3
(22) Date of filing: 11.02.2026
(51) Int. Cl.: B25J 9/16, G05B 19/418

(54) **APPARATUS, METHOD, AND PROGRAM FOR DECIDING EXECUTION PLAN OF TASK**

(30) Priority: 14.02.2025 JP 2025022103
(71) Applicant: Yokogawa Electric Corporation, Musashino-shi, Tokyo 180-8750 (JP)
(72) Inventor: SUGAWARA, Hiroki, Musashino- shi, Tokyo, 180-8750 (JP); SAKURAI, Yasuki, Musashino- shi, Tokyo, 180-8750 (JP); HATANAKA, Takeshi, Meguro-ku, Tokyo, 152-8550 (JP); OKADA, Yuya, Meguro-ku, Tokyo, 152-8550 (JP); MUHAMMAD, Hanif, Meguro-ku, Tokyo, 152-8550 (JP)
(74) Representative: Hoffmann Eitle

(57) **Abstract**

[Solution] Provided is an apparatus comprising a processor, wherein the processor executes: a generation process for generating an execution plan by allowing at least one task not to be executed, as an execution plan for performing a plurality of tasks by a plurality of robots; and a decision process for deciding a first execution plan in which a value of an objective function satisfies a reference condition among generated execution plans by using an objective function that imposes a penalty when the execution plan includes a task not to be executed, and wherein the penalty imposed on the objective function is a value corresponding to a parameter of the task not to be executed among parameters which are set for respective tasks.

## Description

### BACKGROUND

### 1. TECHNICAL FIELD

The present invention relates to an apparatus, a method, and a program for deciding an execution plan of a task.

### 2. RELATED ART

Patent Document 1 and others describe that "an intra-area task, which is at least one task that belongs to the target area among the plurality of tasks is allocated to a robot..." (claim 1 of Patent Document 1).

### RELATED ART DOCUMENTS

### Patent Documents

Patent Document 1: Japanese Patent Application Publication No. 2024-099938
Patent Document 2: International Publication NO. 2023/026592
Patent Document 3: Japanese Patent Application Publication No. 2021-104900
Patent Document 4: Japanese Patent Application Publication No. 2006-326703
Non-Patent Document 1: Jaroslav Janos, "Multi-Goal Path Planning Using Multiple Random Trees", "IEEE Robotics and Automation Letters", IEEE, 24 March 2021, Volume 6, pp. 4201-4208
Non-Patent Document 2: Philipp Schillinger, "Simultaneous Task Allocation and Planning for Temporal Logic Goals in Heterogeneous Multi-Robot Systems", "International Journal of Robotics Research", Volume 37, pp. 818-838

### SUMMARY

(1) A first aspect of the present invention provides an apparatus comprising a processor, wherein the processor executes: a generation process for generating an execution plan by allowing at least one task not to be executed, as an execution plan for performing a plurality of tasks by a plurality of robots; and a decision process for deciding a first execution plan in which a value of an objective function satisfies a reference condition among generated execution plans by using an objective function that imposes a penalty when the execution plan includes a task not to be executed. In the decision process, the first execution plan in which the value of the objective function is minimum may be decided among generated execution plans.
(2) In the apparatus of (1) described above, the penalty imposed on the objective function may have a value corresponding to a parameter of the task not to be executed among parameters which are set for respective tasks.
(3) In the apparatus of (2) described above, the processor may further execute a setting process for setting a parameter for each task to a value that is larger as a priority of the task is higher. In the setting process, the parameter may be reset for each reference time.
(4) In the apparatus of (3) described above, the processor may generate a next execution plan by further executing the generation process for a plurality of new tasks including the task not to be executed in the first execution plan, decides a second execution plan in which a value of an objective function satisfies the reference condition by further executing the decision process for the next execution plan generated, and, in the setting process, makes a parameter larger for the task not to be executed when deciding the second execution plan, compared to when deciding the first execution plan.
(5) In any apparatus of (1) to (4) described above, the processor may further execute an output process for outputting the first execution plan and information indicating the task not to be executed in the first execution plan.
(6) In any apparatus of (1) to (5) described above, the processor may further execute a first acquisition process for acquiring an execution position for each task, and a second acquisition process for acquiring at least one of a charge position or a current location for each robot, and the objective function may include, as a factor, a cost corresponding to a movement distance of each robot when the execution plan is executed.
(7) In any apparatus of (1) to (6) described above, the processor may further execute a detection process for detecting a first robot that satisfies a specification required for an interrupting task and that is positioned within a reference range from an execution position of the interrupting task among the plurality of robots, when the interrupting task occurs to be executed by interruption during an execution of the first execution plan, and a first correction process for correcting the first execution plan such that the first robot executes the interrupting task during a waiting time of the first robot in the first execution plan.
(8) A second aspect of the present invention provides an apparatus including a processor, the processor executes a generation process for generating a first execution plan for executing a plurality of tasks by a plurality of robots, a detection process for detecting a first robot that satisfies a specification required for the interrupting task and that is positioned within a reference range from a location where the interrupting task is performed among the plurality of robots when an interrupting task occurs during an execution of the first execution plan, and a first correction process for correcting the first execution plan such that the first robot executes the interrupting task in a waiting time of the first robot in the first execution plan.
(9) In the apparatus of (7) or (8) described above, the processor may correct the first execution plan such that the first robot executes the interrupting task while the plurality of robots are executing the plurality of tasks including the interrupting task in the first correction process when the first execution plan includes no waiting time of the first robot. In the first correction process, the first execution plan may be corrected such that the first robot performs the interrupting task during a provisional waiting time by creating the provisional waiting time for the first robot by allocating, to another robot, any task allocated to the first robot within the first execution plan.
(10) In any apparatus of (7) to (9) described above, the processor may further execute a control process for causing the first robot to execute the interrupting task regardless of the first execution plan, in response to a priority of the interrupting task being higher than a reference priority.
(11) In the apparatus of (10) described above, the processor may further execute a second correction process for correcting the first execution plan such that the plurality of robots execute an inexecutable task in response to the inexecutable task occurring among tasks allocated to the first robot in the first execution plan due to the first robot executing the interrupting task.
(12) In the apparatus of (11) described above, the processor may correct the first execution plan such that the inexecutable task is executed by the plurality of robots other than the first robot in the second correction process. In the second correction process, the first execution plan may be corrected such that inexecutable task is executed by a robot among the plurality of robots, unlike the first robot, which satisfies the specification required for the inexecutable task and for which the waiting time is provided within the first execution plan.
(13) A third aspect of the present invention provides a method of performing: a generation process for generating an execution plan by allowing at least one task not to be executed, as an execution plan for executing a plurality of tasks by a plurality of robots; and a decision process for deciding a first execution plan in which a value of an objective function satisfies a reference condition among execution plans generated, by using an objective function that imposes a penalty when the execution plan includes a task not to be executed.
(14) A fourth aspect of the present invention provides a method of executing a generation process for generating a first execution plan for executing a plurality of tasks by a plurality of robots, a detection process for detecting a first robot that satisfies a specification required for the interrupting task and that is positioned within a reference range from a location where the interrupting task is performed among the plurality of robots when an interrupting task occurs during an execution of the first execution plan, and a first correction process for correcting the first execution plan such that the first robot executes the interrupting task in a waiting time of the first robot in the first execution plan.
(15) A fifth aspect of the present invention provides a program which, when executed by a computer, causes the computer to execute: a generation process for generating an execution plan by allowing at least one task not to be executed, as an execution plan for performing a plurality of tasks by a plurality of robots; and a decision process for deciding a first execution plan in which a value of an objective function satisfies a reference condition among generated execution plans by using an objective function that imposes a penalty when the execution plan includes a task not to be executed.
(16) A sixth aspect of the present invention provides a non-transitory computer-readable medium having recorded thereon a program which, when executed by a computer, causes the computer to execute a generation process for generating a first execution plan for executing a plurality of tasks by a plurality of robots, a detection process for detecting a first robot that satisfies a specification required for the interrupting task and that is positioned within a reference range from a location where the interrupting task is performed among the plurality of robots when an interrupting task occurs during an execution of the first execution plan, and a first correction process for correcting the first execution plan such that the first robot executes the interrupting task in a waiting time of the first robot in the first execution plan.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an example of a block diagram of an apparatus 100 according to a first embodiment along with a facility 10 to be operated.
Fig. 2 illustrates a generation process unit 1502 along with a decision process unit 1503.
Fig. 3 illustrates an example of various types of information stored in the apparatus 100 according to the first embodiment.
Fig. 4 illustrates an example of a result of area allocation executed by the apparatus 100 according to the first embodiment.
Fig. 5 illustrates an example of a result of a task allocation executed by the apparatus 100 according to the first embodiment.
Fig. 6 illustrates another example of a result of the task allocation executed by the apparatus 100 according to the first embodiment.
Fig. 7 illustrates an example of an intra-area path decided by the apparatus 100 according to the first embodiment.
Fig. 8 illustrates an example of an inter-area path decided by the apparatus 100 according to the first embodiment.
Fig. 9 illustrates an example of a flow diagram of a method performed by the apparatus 100 of the first embodiment.
Fig. 10 illustrates an example of a flow diagram of a method performed by the apparatus 100 of the first embodiment.
Fig. 11 illustrates an example of a block diagram of the apparatus 100 according to a first variant of the first embodiment along with the facility 10 to be operated.
Fig. 12 illustrates an example of a block diagram of the apparatus 100 according to a second variant of the first embodiment along with the facility 10 to be operated.
Fig. 13 illustrates an example of a block diagram of the apparatus 100 according to a third variant of the first embodiment along with the facility 10 to be operated.
Fig. 14 illustrates an example of a flow diagram of a method performed by the apparatus 100 according to a third variant of the first embodiment in order to repeatedly build an operation plan.
Fig. 15 illustrates an example of a block diagram of the apparatus 100 according to the third variant of the first embodiment along with the facility 10 to be operated.
Fig. 16 illustrates an example of a block diagram of an apparatus 100 according to a second embodiment along with a facility 10 to be operated.
Fig. 17 illustrates an example of a flow diagram of a method of performing an interrupting task by the apparatus 100 according to a second embodiment.
Fig. 18 illustrates an example of a block diagram of the apparatus 100 according to a variant of the second embodiment along with the facility 10 to be operated.
Fig. 19 illustrates an example of computer 1200 where a plurality of aspects of the present invention may be entirely or partially embodied.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the means for solving the problems of the invention.

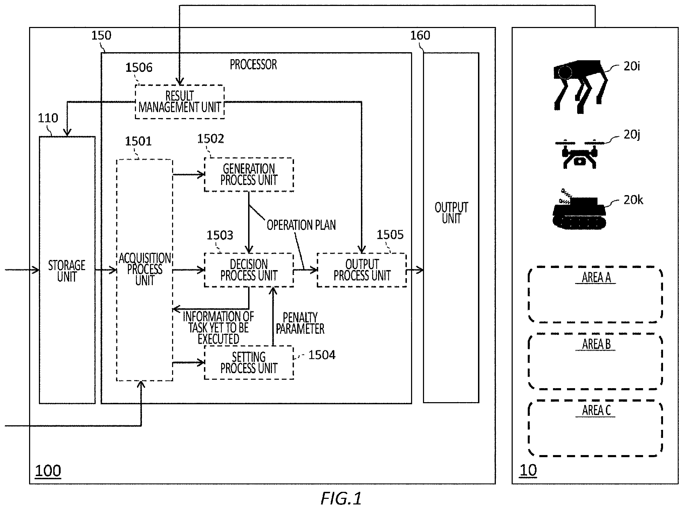

Fig. 1 illustrates an example of a block diagram of an apparatus 100 according to the present embodiment along with a facility 10 to be operated. Note that, these blocks are functional blocks that are each functionally divided, and may not be necessarily required to be matched with actual apparatus configurations. In other words, in the present figure, a unit shown as one block does not necessarily need to be configured by one device. In addition, in the present figure, units shown as separate blocks do not necessarily need to be configured by separate devices. The same applies to other block diagrams.

The facility 10 is a facility, an apparatus, a building, or the like to be operated. For example, the facility 10 may be a plant. Examples of the plant may include a plant for managing and controlling wells such as a gas field and an oil field and surroundings thereof, a plant for managing and controlling hydroelectric, thermo electric and nuclear power generations and the like, a plant for managing and controlling environmental power generation such as solar power and wind power, a plant for managing and controlling water and sewerage, a dam, and the like, etc., in addition to chemical and bio industrial plants and the like. The facility 10 may be provided with a plurality of areas that are shown as three areas A to C as an example in the present figure.

In such a facility 10, expectations for robot introduction are increasing due to problems such as a shortage of human resources, safety at the time of work, and maintenance cost, and development of a wide variety of robots having different specifications is progressing. Among the robots under development or already developed, there are robots which can autonomously move and robots which can execute tasks without human intervention. It has been studied to at least partially operate the facility 10 by a multi-robot system in which a plurality of such robots are introduced.

A robot 20 is introduced into the facility 10 and executes various tasks related to the operation of the facility 10. In the present figure, a case where three robots 20 of a robot 20i, a robot 20j, and a robot 20k (collectively referred to as a "robot(s) 20") are introduced into the facility 10 is illustrated as an example.

For example, the robot 20i may be a robot capable of autonomous travel by quadruped walking. In addition, for example, the robot 20i may be capable of measuring surrounding sound with a mounted microphone and capable of imaging a target to be imaged with a mounted camera. In addition, the robot 20i may be movable at, for example, 5 km/h. In addition, for example, the robot 20i may be capable of continuous operation for 3 hours when the battery is fully charged. In addition, the robot 20i may be capable of climbing over a step of 20 cm or less, for example.

For example, the robot 20j may be a robot (a drone, a multicopter, or the like) capable of autonomous flight by rotary wings. In addition, the robot 20j may be capable of measuring the temperature of a measurement target with a mounted thermal camera and capable of imaging a target to be imaged with a mounted camera. In addition, the robot 20j may be movable at, for example, 10 km/h. In addition, for example, the robot 20j may be capable of continuous operation for 5 hours when the battery is fully charged.

For example, the robot 20k may be a robot capable of autonomous travel by a caterpillar. In addition, for example, the robot 20k may be capable of measuring surrounding sound with a mounted microphone and capable of operating a manipulator (a valve or the like) by a mounted arm. In addition, the robot 20k may be movable at, for example, 3 km/h. In addition, the robot 20k may be capable of continuous operation for 2 hours when the battery is fully charged. In addition, for example, the robot 20k may have anti-explosion resistance. In addition, the robot 20z may be capable of climbing over a step of 50 cm or less, for example.

The robot 20 may further have mounted thereon a sensor for recognizing a surrounding environment such as a LiDAR sensor, a function for estimating a self-position from the recognized surrounding environment, or the like. A wide variety of the plurality of robots 20 with different specifications may be introduced into the facility 10. Note that, in the above description, a case where three robots 20, such as the robot 20i, the robot 20j, and the robot 20k, having different specifications are introduced into the facility 10 has been described as an example. However, the number and specifications of the robots 20 introduced into the facility 10 are not limited thereto, and a multi-robot system may be constituted by various combinations of various robots 20. In this case, for example, a plurality of robots to be introduced into the facility 10 may include a plurality of robots having the same specification.

The apparatus 100 includes a storage unit 110, a processor 150, and an output unit 160.

The storage unit 110 stores various types of information for building an operation plan. Such information may be acquired from the facility 10 or an external system via a network, may be acquired via user input, or may be acquired via various memory devices. The storage unit 110 according to the present embodiment may store a program, not shown, and other information. The program causes the processor 150 to perform a variety of processes when executed by the processor 150. The other information stored in the storage unit 110 will be described below in detail.

The processor 150 performs a variety of processes by executing the program in the storage unit 110. The processor 150 may implement functional units for performing a variety of processes by executing the program. The processor 150 according to the present embodiment may implement an acquisition process unit 1501, a generation process unit 1502, a decision process unit 1503, a setting process unit 1504, an output process unit 1505, and a result management unit 1506.

The acquisition process unit 1501 acquires a variety of information related to the facility 10 and the robot 20. The acquisition process unit 1501 may acquire information from the storage unit 110, may acquire information from an external storage not shown, and may acquire information from a user via an input device not shown.

The acquisition process unit 1501 may acquire, for each task to be executed by the robot 20, task information indicating a content of the task. As described below in detail, the task information may include an execution position of the task, a specification of the robot 20 required for execution of the task, a priority of the task, and the like.

The acquisition process unit 1501 may acquire, for each robot 20, specification information indicating the specification of the robot. As described below in detail, the specification information may include a charge position, a current location, and the like of the robot 20.

The acquisition process unit 1501 may supply the acquired task information and the specification information to the generation process unit 1502. The acquisition process unit 1501 may supply the acquired specification information to the decision process unit 1503. The acquisition process unit 1501 may supply the acquired task information to the setting process unit 1504. The acquisition process unit 1501 may store the task information and the specification information in the storage unit 110 when the information is acquired not through the storage unit 110.

The generation process unit 1502 generates a candidate for an operation plan, which may also be referred to as an execution plan, in which a plurality of tasks are executed by a plurality of robots 20. The generation process unit 1502 may generate one or more operation plans. The generation process unit 1502 may generate an operation plan in which a plurality of tasks indicated by the task information acquired by the acquisition process unit 1501 are executed by the plurality of robots indicated by the specification information acquired by the acquisition process unit 1501, and may generate an operation plan by solving an MRTA (Multi-Robot Task Allocation) problem.

The generation process unit 1502 according to the present embodiment may generate an operation plan by allowing at least one task not to be executed. The generation process unit 1502 may generate the operation plan by allowing at least one task not to be executed when an inexecutable task occurs because there are too many tasks to be executed relative to the robots 20 in the facility 10. The generation process unit 1502 may generate the operation plan by allowing at least one task not to be executed when there is no inexecutable task.

When an operation plan can be generated in which at most N tasks are executed, the generation process unit 1502 may generate an operation plan in which all of N tasks are executed or may generate an operation plan in which only N-1 or less tasks are executed. The number of at least one task "N" may be a total number of at least one task to be executed or may be a number less than the total number.

The generation process unit 1502 may generate an operation plan in which all robots 20 are operated or may generate an operation plan in which at least one robot 20 is not operated.

The generation process unit 1502 may generate an operation plan for each of periods, which may also be referred to as operation periods, having a length of a reference time, which may be 24 hours or 8 hours as an example, and may sequentially generate an operation plan for an operation period after the operation period including the current point of time. As an example, the generation process unit 1502 may generate an operation plan for a first operation period, which may also be referred to as a first operation plan, in a 0th operation period before the first operation period, and may generate an operation plan for a second operation period, which may also be referred to as a second operation plan, in the first operation period. The generation process unit 1502 may supply the generated operation plan to the decision process unit 1503 for each operation period.

The decision process unit 1503 decides, from one or more operation plans for each operation period generated by the generation process unit 1502, an operation plan as a target to be executed during the operation period. As an example, the decision process unit 1503 may decide, from one or more first operation plans generated for the first operation period, a first operation plan to be executed during the first operation period.

The decision process unit 1503 may decide, from the generated operation plans, an operation plan in which a value of an objective function satisfies a reference condition by using an objective function that imposes a penalty when the operation plan includes a task not to be executed. The reference condition may be set in advance to any value. As an example, the reference condition may be set to any value through trial and error such that operation of the facility 10 can be continued.

The objective function is a value of a function that should be maximized or minimized, and, as an example in the present embodiment, may be a value of a function that should be minimized. The objective function may be a function the value of which is determined according to the content of the operation plan. The objective function may include a factor which will be a larger penalty, which may be a penalty term as an example, when the operation plan includes a task not to be executed, compared to when the operation plan does not include a task not to be executed. The penalty imposed on the objective function may be a value corresponding to a penalty parameter of the task not to be executed among parameters that are set for respective tasks, which may also be referred to as penalty parameters. The value corresponding to the penalty parameter may be a value of the penalty parameter itself, may be a value obtained by multiplying the penalty parameter by a predetermined coefficient, or may be another value obtained by calculation using the penalty parameter. When the operation plan includes a plurality of tasks not to be executed, the penalty imposed on the objective function may be a value corresponding to a total of the penalty parameters for each task not to be executed.

The objective function may further include, as a factor, a cost corresponding to a movement distance of each robot 20 when the operation plan is executed. The cost corresponding to the movement distance may be a value that is larger as a total of the movement distance of each robot 20 becomes larger. The objective function may further include, as a factor, a running cost of the robot 20, an operation rate of the robot 20, a total operation time, and the like.

The decision process unit 1503 may supply the decided operation plan to the output process unit 1505. The decision process unit 1503 may supply task information about a task not to be executed in the operation plan to the acquisition process unit 1501 as task information about a task to be executed in a next or later operation period. As an example, the decision process unit 1503 may supply task information about a task not to be executed in the first operation plan to the acquisition process unit 1501 as task information about a task to be executed in the second operation period or later.

The setting process unit 1504 sets a penalty parameter for each task. The setting process unit 1504 may set the penalty parameter based on a priority of the task. For example, the setting process unit 1504 may set the penalty parameter for each task to a value that is larger as the priority of the task is higher. The setting process unit 1504 may reset the penalty parameter for each operation period.

The output process unit 1505 outputs various kinds of information via the output unit 160. For example, the output process unit 1505 may output an operation plan decided by the decision process unit 1503, which may be the first operation plan as an example, and information indicating a task not to be executed in the operation plan.

The result management unit 1506 manages the various kinds of information acquired by executing the task by the robot 20. The result management unit 1506 may acquire various kinds of information via a network from an external system, and stores the acquired information in the storage unit 110 and outputs it from the output unit 160 via the output process unit 1505. The information acquired by the result management unit 1506 may include information such as an image acquired by the robot 20, which may be a motion image, a still image, a heat image and the like as an example, a sound, measurement data or the like.

The result management unit 1506 may estimate a position of the robot from the measurement data of the robot 20, may determine a state of the facility 10, and may determine a state of the robot 20. The result management unit 1506 may determine whether the task is completed based on the data acquired from the robot 20. As an example, when an obscure image is acquired from the robot 20 to which a task of capturing an image of an inside of the facility 10 is allocated, the result management unit 1506 may determine that the task is not completed. The result management unit 1506 may reset the task as a task to be executed in response to the determination that the task is not completed, and, as an example, may store anew the task information of the task in the storage unit 110. The result management unit 1506 may delete the task information of the task from the task information stored in the storage unit 110 in response to the determination that the task is completed, and may add information indicating a completion to the task information about the task among task information stored in the storage unit 110.

The output unit 160 outputs various kinds of information. The output unit 160 may be a monitor and may display various types of information as an output. Alternatively or in addition to this, the output unit 160 may be a communication unit and may send the various types of information to another functional unit or another apparatus as an output. Alternatively or in addition to this, the output unit 160 may be a printer and may print various types of information as an output. Alternatively or in addition to this, the output unit 160 may be a speaker and may output various types of information as a sound.

The apparatus 100 including such a functional unit may be a computer such as a personal computer (PC), a tablet computer, a smartphone, a workstation, a server computer, or a general-purpose computer, or may be a computer system in which a plurality of computers are connected. Such a computer system is also a computer in a broad sense. In addition, the apparatus 100 may be implemented by one or more virtual computer environments which are able to be run in the computer. Alternatively, the apparatus 100 may be a dedicated computer customized to provide the above-described functions, or may be dedicated hardware implemented by a dedicated circuit. In addition, when connection to the Internet is possible, the apparatus 100 may be implemented by cloud computing.

According to the apparatus 100 above, the operation plan is generated by allowing at least one task not to be executed, as an operation plan for executing a plurality of tasks by the plurality of robots 20. From the generated operation plans, an operation plan in which a value of the objective function satisfies a reference condition, which may be a first operation plan as an example, is decided by using the objective function that imposes a penalty when the operation plan includes a task not to be executed. Therefore, the operation plan can be decided such that a failure of generation of the operation plan is prevented and a task not to be executed is unlikely to occur, when an amount of tasks is high and a resource of the robots 20 is deficient.

The operation plan can be decided such that a task having a larger penalty parameter is more surely executed, because the penalty corresponding to the penalty parameter of the task not to be executed among the penalty parameters that are set for respective tasks is imposed on the objective function.

A value of the penalty parameter of the task is set larger as the priority of the task is higher. Therefore, the operation plan can be decided such that the task having a higher priority is more surely executed.

Because the operation plan and the information indicating the task not to be executed in the operation plan are output, the user can surely grasp which task is to be executed and which task is not to be executed among the plurality of tasks.

The objective function includes, as a factor, a cost corresponding to a movement distance of each robot 20 when the operation plan is executed. Therefore, the operation plan can be decided such that the movement distance of the robot 20 is short.

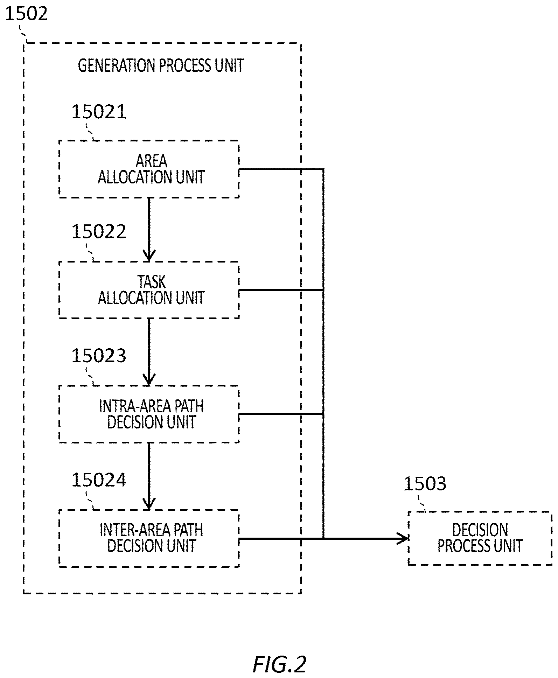

Fig. 2 illustrates the generation process unit 1502 along with the decision process unit 1503. It is necessary to build an operation plan when operating the facility 10 by a multi-robot system. However, in building such an operation plan, it is necessary to consider various elements such as specifications of a wide range of robots, requirements of a wide variety of tasks, and constraints due to the environment of the facility 10. Therefore, building the operation plan based on people or rules requires considerable man-hours, and may cause a problem that the built plan is inefficient, and a problem that an inexecutable task is allocated to the robot 20.

Conventionally, a method using an optimization technique has been established for such a problem, and it is known to build an optimization problem based on various elements described above, planning strategies, and the like, and solve it to obtain a desired operation plan. However, solving the problem of the operation plan involving the multi-robot system is considered a task, called a NP-hard problem, which requires a very high calculation cost, and it is impractical to put into operation. In addition, the calculation cost also depends on the scale of the facility 10 and the number of robots 20 to be introduced, and for example, when a large number of the robots 20 are introduced into a large scale facility 10 such as a plant, it is expected that merely implementing a method for reducing a calculation load and obtaining an approximate solution is not sufficient to reach an operational status.

As an example, the generation process unit 1502 according to the present embodiment may execute a process by dividing it into an area allocation, a task allocation, an intra-area path decision, and an inter-area path decision. Thereby, the generation process unit 1502 according to the present embodiment can quickly solve an operation plan problem for the plurality of robots 20 regardless of a scale of the facility 10 or the number of the robots 20 and build a practical operation plan within a practical calculation time. The generation process unit 1502 includes an area allocation unit 15021, a task allocation unit 15022, an intra-area path decision unit 15023, and an inter-area path decision unit 15024.

The area allocation unit 15021 executes an area allocation of allocating the plurality of robots 20 to the plurality of areas defined by dividing the facility 10 based on specifications of the plurality of robots 20 and requirements for the plurality of tasks to be executed in the facility 10 to be operated. The area allocation unit 15021 supplies a result of the area allocation to the task allocation unit 15022, the intra-area path decision unit 15023, the inter-area path decision unit 15024, and the decision process unit 1503.

For a target area which is each of the plurality of areas, the task allocation unit 15022 executes a task allocation of allocating an intra-area task, which is at least one task that belongs to the target area among the plurality of tasks, to a target robot which is at least one robot allocated to the target area among the plurality of robots 20. The task allocation unit 15022 supplies a result of the task allocation to the intra-area path decision unit 15023 and the decision process unit 1503.

The intra-area path decision unit 15023 decides an intra-area path, along which the target robot is moved within the target area, based on the result of the task allocation. The intra-area path decision unit 15023 supplies the decided intra-area path to the decision process unit 1503.

The inter-area path decision unit 15024 decides an inter-area path, along which the plurality of robots 20 are moved between areas among the plurality of areas, based on the result of the area allocation. The inter-area path decision unit 15024 supplies the decided inter-area path to the decision process unit 1503.

The intra-area path decision unit 15023 and the inter-area path decision unit 15024 may decide a path by solving a so-called traveling salesman problem, TSP problem, or may decide the path by at least one combination of a SFF* method, RRT* or space-time RRT method, as described in Non-Patent Document 1, etc..

The generation process unit 1502 may execute the generation process of the operation plan without dividing it into the area allocation, the task allocation, the intra-area path decision, and the inter-area path decision. For example, the generation process unit 1502 may collectively execute the area allocation and the task allocation. As an example, a case will be described in which the task allocation unit 15022 of the generation process unit 1502 collectively executes the area allocation and the task allocation in cooperation with the area allocation unit 15021. The process related to the area allocation may be executed by the task allocation unit 15022.

The task allocation unit 15022 may execute the area allocation and the task allocation by integer programming.

For example, the task allocation unit 15022 may execute the area allocation by using a binary variable η_{r,a,s}, a binary variable ζ_{r,s}, and an integer variable v_{r,a,s,f}. Here, the subscript "r" is an identification number of the robot, "a" is an identification number of the area, "s" is an identification number of a time slot, and "f" indicates an identification number of a function of the robot. The binary variable η_{r,a,s} indicates, when its value is 1, that the robot executes the task in the time slot in the area and indicates, when its value is 0, that the robot does not execute the task in the time slot in the area, which may mean that the robot is on charge as an example. The binary variable ζ_{r,s} indicates, when its value is 1, that a state of the robot 20 transitions between an operational condition and a non-operational condition, which may be a waiting state or charging state as an example in the present embodiment, between a time slot s and a time slot s+1 and indicates, when its value is 0, that there is no transition. The integer variable v_{r,a,s,f} indicates a number of at least one task executed in the area and the time slot by the robot.

As an example, the task allocation unit 15022 may allocate an area to each robot 20 such that a constraint indicated in the following expression is satisfied. In the expression, "A" may be a maximum value of the identification number of the area and "F" may be a maximum value of the identification number of the function. "Cr" may be a constant and may be Cr=A as an example. "T_{MAX}" is an upper limit value of a number of at least one task that can be executed in one time slot. "Σ(a=1->A)η_{r,a,s}" indicates a sum of η_{r,a,s} when incrementing a value of a by 1 to A. When the left-hand side of the expression A1 is 0, it may mean that a robot r is on charge in the time slot s.$Σ \left(a=-1>A\right) {η}_{r , a , s} \leq 1$ $Σ \left(f=1->F\right) \left({ν}_{r , a , s , f}-Cr⋅{η}_{r , a , s}\right) \leq 0$ $Σ \left(f=1->F\right) {ν}_{r , a , s , f} \leq {T}_{MAX}$

When a particular robot (r') has no specific function (f'), the task allocation unit 15022 may execute an allocation of the area such that the following expression is satisfied. The symbol "'" in the notation of "r'", "f'" or the like indicates a particular identification number. ${ν}_{r ′ , a , s , f ′} = 0$

The task allocation unit 15022 may execute the task allocation by using the binary variable δ_{r,t,s} and the binary variable δ_{r,s}. Here, the subscript "t" indicates an identification number of the task. The binary variable δ_{r,t,s} indicates, when its value is 1, that the task is allocated to the time slot and the robot 20 and indicates, when its value is 0, that the task is not allocated to the time slot and the robot 20. The binary variable δ_{r,s} indicates, when its value is 1, that the robot 20 executes some task, i.e., operates, in the time slot and indicates, when its value is 0, that the robot 20 waits or is on charge without executing any task in the time slot, i.e., does not operate. The binary variable δ_{r,t,s} and the binary variable δ_{r,s} may be variables for a particular area (a').

As an example, the task allocation unit 15022 may allocate a task to each robot 20 such that a constraint indicated in each of the following expressions is satisfied.${δ}_{r , t , s} - {δ}_{r , s} \leq 0 \left(t=1,2,…T\right)$ $Σ \left(t=1->T\right) {δ}_{r , t , s} \geq 0$

In addition to this, the task allocation unit 15022 may execute the task allocation by using the binary variable ζ_{r,s}. As an example, the task allocation unit 15022 may allocate a task to each robot 20 such that a constraint indicated in each of the following expressions is satisfied.${ζ}_{r , s} + {δ}_{r , s} + {δ}_{r , s + 1} \leq 2$ $- {ζ}_{r , s} - {δ}_{r , s} + {δ}_{r , s + 1} \leq 0$ ${ζ}_{r , s} - {δ}_{r , s} - {δ}_{r , s + 1} \leq 0$ $- {ζ}_{r , s} + {δ}_{r , s} - {δ}_{r , s + 1} \leq 0$

The task allocation unit 15022 may execute the task allocation by using the binary variable ζ_{r,s} and the binary variable η_{r,a,s}. As an example, the task allocation unit 15022 may allocate a task to each robot 20 such that a constraint indicated in each of the following expressions is satisfied.${ζ}_{r , s} + Σ \left(a=1->A\right) {η}_{r , a , s} + Σ \left(a=1->A\right) {η}_{r , a , s + 1} \leq 2$ $- {ζ}_{r , s} - Σ \left(a=1->A\right) {η}_{r , a , s} + Σ \left(a=1->A\right) {η}_{r , a , s + 1} \leq 0$ ${ζ}_{r , s} - Σ \left(a=1->A\right) {η}_{r , a , s} - Σ \left(a=1->A\right) {η}_{r , a , s + 1} \leq 0$ $- {ζ}_{r , s} + Σ \left(a=1->A\right) {η}_{r , a , s} - Σ \left(a=1->A\right) {η}_{r , a , s + 1} \leq 0$

The task allocation unit 15022 may execute the allocation of tasks such that other constraints are met which indicates the specification of the robot 20, the expiration time of the task, and the like by using the binary variable as described above.

For example, when a particular task (t') must be executed in a particular time slot (s'), the task allocation unit 15022 may execute the allocation of tasks such that the following expression is satisfied. In the expression, "R" may be a maximum value of the identification number of the robot 20. $Σ \left(r=1->R\right) {δ}_{r , t ′ , s ′} \geq 1$

When the particular robot (r') cannot execute the particular task (t') due to the specification, the task allocation unit 15022 may execute the allocation of tasks such that the following expression is satisfied. In the expression, "S" may be a maximum value of the identification number of the time slot within the operation period. $Σ \left(s=1->S\right) {δ}_{r ′ , t ′ , s} = 0$

When any robot 20 cannot execute the particular task (t') due to the specification, the task allocation unit 15022 may execute the allocation of tasks such that the following expression is satisfied. Thus, the task may not be allocated and may be excluded from the task to be executed. $Σ \left(s=1->S\right) Σ \left(r=1->R\right) {δ}_{r , t ′ , s} = 0$

When there is an upper limit for a number of at least one task executed in the particular time slot (s') by the particular robot (r'), the task allocation unit 15022 may execute the allocation of tasks such that the following expression is satisfied. $Σ \left(t=1->T\right) {δ}_{r ′ , t , s ′} \leq {T}_{MAX}$

When there is an upper limit for a number of at least one time slot during which each robot 20 can achieve a continuous operation, the task allocation unit 15022 may execute the allocation of tasks such that the following expression is satisfied. In the expression, "P" is an upper limit value of a number of at least one time slot during which a continuous operation can be achieved. In the expression, "s'" is any integer that satisfies 1≤s'≤S. $Σ \left(s=s′->s′+P+C\right) {δ}_{r , s} \leq P$ $Σ \left(s=s′->s′+P+C\right) Σ \left(a=1->A\right) \left({η}_{r , a , s}\right) \leq P$

When the particular robot (r') is not operated in the particular area (a') and the particular time slot (s'), i.e., when the binary variable η_{r',a',s'}=0, the task allocation unit 15022 may execute the allocation of tasks such that any of the following expressions is satisfied. $Σ \left(t=1->T\right) {δ}_{r ′ , t , s ′} \leq 0 or {δ}_{r ′ , s ′} \leq 0$ $Σ \left(t=1->T\right) {δ}_{r ′ , t , s ′} \leq Σ \left(f=1->F\right) {ν}_{r ′ , a ′ , s ′ , f}$

When a constraint on a relationship between a number of at least one time slot required for charging and a number of at least one time slot in which the particular robot (r') can achieve a continuous operation, the task allocation unit 15022 may execute the allocation of the task such that the following expression is satisfied. In the expression, "C" is the number of at least one time slot required for charging and "s'" is any integer that satisfies s'+P+C≤S. The task allocation unit 15022 may calculate a value of the number of at least one time slot C from a full charge capacity of the battery and a remaining battery amount. $Σ \left(s=s′->s′+P+C\right) {δ}_{r ′ , s} \leq P$

When a constraint which limits a transition between the operational condition and the non-operational condition of the robot 20 to continuously operate the robot 20, the task allocation unit 15022 may execute the allocation of tasks such that any of the following expressions is satisfied. In the expression, "s'" is any integer that satisfies s'+P+C≤S. $Σ \left(s=s′->s′+P+C\right) {ζ}_{r , s} \leq 2$

When each robot 20 requires charging, such as when starting the operation of the facility 10, the task allocation unit 15022 may execute the allocation of tasks such that the following expression is satisfied. In the expression, "C'" is any integer that satisfies C'≤C. $Σ \left(s=0->C′\right) {δ}_{r , s} = 0$

The task allocation unit 15022 may execute the area allocation and the task allocation by using a variable N_{f}(a,s',f), a variable Nₛ(a,s',f), and a variable N_{w}(a,s₁,s₂,f). Here, the variable N_{f}(a,s',f) indicates a number of at least one task, an executable period of which ends in the particular time slot (s'), among the tasks executed by using the function in the area. Here, the variable Nₛ(a,s',f) indicates a number of at least one task, the executable period of which starts in the particular time slot (s'), among the tasks executed by using the function in the area. The variable N_{w}(a,s₁,s₂,f) indicates a number of at least one task, the executable period of which starts and ends from a beginning of a particular time slot (s1) to an end of a particular time slot (s2), among the tasks executed by using the function in the area.

As an example, the task allocation unit 15022 may allocate a task to each robot 20 such that a constraint indicated in the following expression is satisfied.$\begin{matrix}Σ \left(s=1->s′\right) Σ \left(r=1->R\right) {ν}_{r , a , s , f} \\ \geq Σ \left(s=1->s′\right) {N}_{f} \left(a,s′,f\right)\end{matrix}$ $\begin{matrix}Σ \left(s=1->s′\right) Σ \left(r=1->R\right) {ν}_{r , a , s , f} \\ \leq Σ \left(s=1->s′\right) {N}_{s} \left(a,s′,f\right)\end{matrix}$ $\begin{matrix}Σ \left(s={s}_{1}->{s}_{2}\right) Σ \left(r=1->R\right) {ν}_{r , a , s , f} \\ \geq Σ \left(s={s}_{1}->{s}_{2}\right) {N}_{w} \left(a{, s}_{1}{, s}_{2},f\right)\end{matrix}$

The task allocation unit 15022 may treat an allocation strategy of areas and tasks as an optimization problem by expressing it as an objective function. In other words, the task allocation unit 15022 may solve a MRT problem by an optimization approach. The task allocation unit 15022 may execute the allocation by using an objective function min (ΣᵣΣₜΣₛf(s)·δ_{r,t,s}) using a function f (s) of the time slot, or may execute the allocation by using an objective function min (ΣᵣΣₐΣₛΣ_{f}f(s)·v_{r,a,s,f}). The function f(s) may be a function which has a value that is larger as "s" increases. Thereby, tasks can be allocated such that each task is executed as early as possible. The task allocation unit 15022 may execute the allocation by using an objective function min (ΣᵣΣₛf(s)·δ_{r,s}), or may execute the allocation by using an objective function min (ΣᵣΣₐΣₛΣ_{f}f(s)·η_{r,a,s}). Thereby, tasks can be allocated to one robot 20 as many as possible within one time slot. The task allocation unit 15022 may solve the MRT problem not by the optimization approach but by another approach such as a market-based approach or a behavior-based approach or the like.

Here, the task allocation unit 15022 according to the present embodiment may not allocate one or more tasks to be executed to the robot 20. The task allocation unit 15022 may allocate only N-1 or less tasks when an allocation of at most N tasks is possible. The task allocation unit 15022 may execute the allocation by excluding a task as many as a number of at least one task that is not to be allocated, which may also be referred to as a number of at least one non-allocated task, from tasks to be executed, and solving the optimization problem for remaining tasks. The number of at least one non-allocated task may be set in advance.

The task to be excluded may be selected randomly or may be selected based on the task information or the like. The task allocation unit 15022 may execute the allocation of tasks such that the following expression is satisfied for a particular task (t') to be excluded. Thereby, an applicable task may be excluded from the allocation. The task allocation unit 15022 may execute the allocation of tasks without the constraint of the expression 7 described above for the task that is not to be allocated. $Σ \left(s=1->S\right) {δ}_{r , t ′ , s} = 0$

The allocation of the area and the task may be performed by another approach that is different from integer programming, such as an approach by a mixed logical dynamical system.

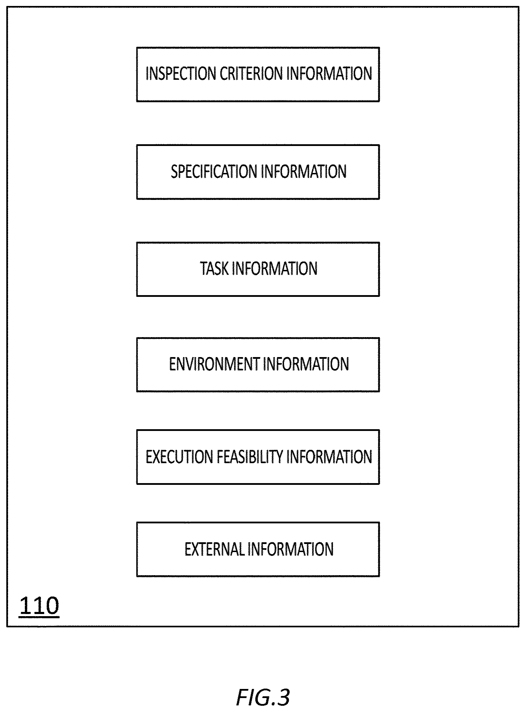

Fig. 3 illustrates an example of various types of information stored in the apparatus 100 according to the present embodiment. The storage unit 110 may store, for example, inspection criterion information, specification information, task information, environment information, execution feasibility information, and external information.

The inspection criterion information is information indicating an inspection criterion set in advance. As an example, the inspection criterion information may include information such as an inspection type, an importance level, a quality determination criterion, and necessity of attendance of a person in charge of maintenance.

The specification information is information indicating a specification in each of the plurality of robots 20. As an example, the specification information may include information such as a moving means, a mounted sensor, which uses a measurable physical amount, a mount arm, a movement velocity, a continuous operation time, a full charge capacity of a battery, a remaining battery amount, a step that can be climbed, an anti-explosion resistance, a number of at least one task executable per unit time, a charge position, and a current location, in each of the plurality of robots 20. The specification information may include recent operation information, which may be task information about an executed task, as an example. Here, the continuous operation time may indicate a time in which an estimated continuous operation is possible according to the full charge capacity of the standard value of the battery or may indicate a time in which an estimated continuous operation is possible according to the full charge capacity when the battery is deteriorated by considering the SOH, State of Health, and may be 0.5 to 2 hours as an example. In addition, the remaining battery amount may indicate a ratio of the current battery charge capacity to the full charge capacity according to the standard value of the battery, i.e., a state of charge (SOC), or may indicate a ratio of the current battery charge capacity to the full charge capacity when the battery is deteriorated considering the SOH.

The task information is information indicating the requirements of a plurality of tasks to be executed in the facility 10. As an example, the task information may include information such as an execution position, an expiration time, a cycle, an item, a procedure, a target instrument, a target manipulator, a specification required for the robot 20, and the priority of the task, for each of the plurality of tasks.

The environment information is information indicating the environment of the facility 10. As an example, the environment information may include information such as a 3D map, temperature, humidity, gas concentration, and radiation dose at each of a plurality of points of the facility 10.

The execution feasibility information is information indicating whether each of the plurality of robots 20 can execute each of the plurality of tasks. In the present embodiment, such execution feasibility information may be manually created in advance in consideration of the specifications of the robot 20, the requirements of the task, the environment of the facility 10, and the like.

The external information is information indicating a disturbance that can influence the building of the operation plan. As an example, the external information may include a maintenance plan, weather, outside temperature, disaster information, and the like.

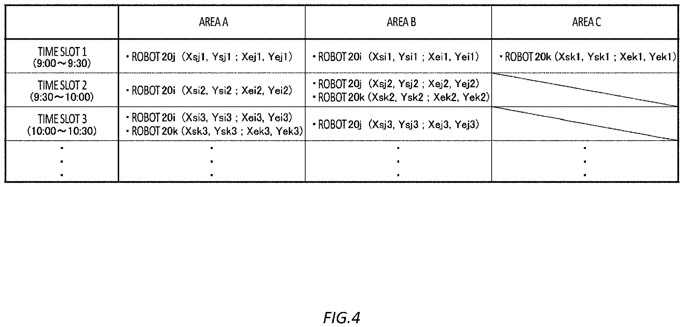

Fig. 4 illustrates an example of a result of the area allocation executed by the apparatus 100 according to the present embodiment. In the present figure, as an example, it is illustrated that the robot 20j is allocated to an area A in a time slot 1 (9:00 to 9:30). In addition, in the present figure, as an example, it is illustrated that the robot 20j and the robot 20k are allocated to an area B in a time slot 2 (9:30 to 10:00). In addition, in the present figure, as an example, it is illustrated that no robot 20 is allocated to an area C in a time slot 3 (10:00 to 10:30).

As described above, the area allocation unit 15021 may allocate the plurality of robots 20 to the plurality of areas for each predetermined time slot. At this time, the area allocation unit 15021 does not necessarily allocate each of the plurality of robots 20 to any of the plurality of areas. For example, the robot 20k has a continuous operation time of 2 hours. In this case, when the robot 20k starts the operation from 9:00, it is predicted to run out of battery at 11:00. In such a case, the area allocation unit 15021 may execute area allocation such that the robot 20k is charged without being allocated to any area in a time slot 4 (10:30 to 11:00), for example.

In the area allocation within one time slot, the area allocation unit 15021 may decide a start point position s and an end point position e in a time slot of positions for each of the plurality of robots 20 based on the result of the area allocation in another time slot. As an example, focusing on the robot 20k, in the present figure, "Xsk1" indicates the X coordinate of a start point position sk1 of the robot 20k in the time slot 1. Similarly, "Ysk1" indicates the Y coordinate of the start point position sk1 of the robot 20k in the time slot 1. In addition, "Xek1" indicates the X coordinate of an end point position ek1 of the robot 20k in the time slot 1. Similarly, "Yek1" indicates the Y coordinate of the end point position ek1 of the robot 20k in the time slot 1.

The robot 20k is allocated to the area C in the time slot 1, allocated to the area B in the time slot 2, and allocated to the area A in the time slot 3. In other words, when the robot 20k transitions from the time slot 1 to the time slot 2, a movement between the areas from the area C to the area B occurs. Similarly, when the robot 20k transitions from the time slot 2 to the time slot 3, a movement between the areas from the area B to the area A occurs.

In such a case, it is preferable that the end point position ek1 of the robot 20k in the time slot 1 and a start point position sk2 of the robot 20k in the time slot 2 are close to each other. Similarly, it is preferable that an end point position ek2 of the robot 20k in the time slot 2 and a start point position sk3 of the robot 20k in the time slot 3 are close to each other.

Therefore, the area allocation unit 15021 may decide the coordinates (Xek1, Yek1) of the end point position ek1 and the coordinates (Xsk2, Ysk2) of the start point position sk2 such that the end point position ek1 and the start point position sk2 are close to each other. Similarly, the area allocation unit 15021 may decide the coordinates (Xek2, Yek2) of the end point position ek2 and the coordinates (Xsk3, Ysk3) of the start point position sk3 such that the end point position ek2 and the start point position sk3 are close to each other. In other words, the area allocation unit 15021 may decide the coordinates of an end point position e(n-1) in a time slot (n-1) and the coordinates of a start point position s(n) in a time slot (n) such that a distance between the end point position e(n-1) in the time slot (n-1) and the start point position s(n) in the time slot (n) is equal to or less than a predetermined threshold (preferably, minimum).

In the case of a first or last time slot having no immediately preceding time slot or following time slot, the area allocation unit 15021 may decide the coordinates of the start point position s and the coordinates of the end point position e such that a distance from any position, for example, a standby position (a charging station or the like) of the robot 20 or the like is equal to or less than a predetermined threshold (preferably, minimum).

The area allocation unit 15021 may execute such area allocation by various existing algorithms based on the specifications of the plurality of robots 20 and the requirements of the plurality of tasks (for example, based on the execution feasibility information). As an example, the area allocation unit 15021 may execute the area allocation by an integer programming method. In this case, the area allocation unit 15021 may execute the area allocation so as to maximize an objective function. At this time, the area allocation unit 15021 may set the objective function such that its value is larger as an amount (number) of tasks to be achieved is larger. In addition, the area allocation unit 15021 may set the objective function such that its value is smaller as a movement distance between areas is larger. Note that, the movement distance between areas is confirmed in inter-area path decision process at the subsequent stage, and is not confirmed at this time. Therefore, the area allocation unit 15021 may decide the movement distance between areas based on a provisional distance which is pre-defined based on the movement from which area to which area.

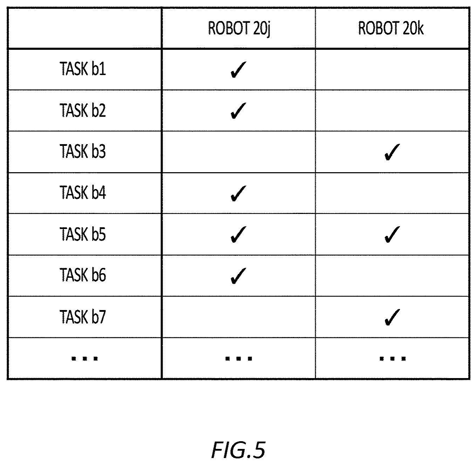

Fig. 5 illustrates an example of a result of a task allocation executed by the apparatus 100 according to the present embodiment. The present figure illustrates, as an example, a task allocation of an area B in the time slot 2. As described above, in the time slot 2, the robot 20j and the robot 20k are allocated to the area B. In this case, the area B is a target area, and the robot 20j and the robot 20k are defined as target robots. In such a case, the task allocation unit 15022 allocates intra-area tasks b1 to bn, which belong to the area B which is the target area, among the plurality of tasks to the robot 20j and the robot 20k which are the target robots among the plurality of robots 20.

**In** the present figure, as an example, it is illustrated that the tasks b1, b2, b4, b5, and b6 are allocated to the robot 20j, and the tasks b3, b5, and b7 are allocated to the robot 20k. Note that, the task b5 is allocated to both the robot 20j and the robot 20k. For example, this may occur in a case where the task b5 is a multi-task such as measuring the temperature of piping when opening and closing the valve. In such a case, the task allocation unit 15022 can allocate the task of opening and closing the valve in the task b5 to the robot 20k equipped with an arm, and allocate the task of measuring the temperature of the piping in the task b5 to the robot 20j equipped with a thermal camera. The task allocation unit 15022 may allocate a common task to a plurality of robots 20 in this manner, for example.

The task allocation unit 15022 may execute such task allocation by various existing algorithms based on the specifications of the plurality of robots 20 and the requirements of the plurality of tasks (for example, based on the execution feasibility information). As an example, similarly to the area allocation unit 15021, the task allocation unit 15022 may execute the task allocation by an integer programming method. The task allocation unit 15022 may not allocate one or more tasks to the robot 20.

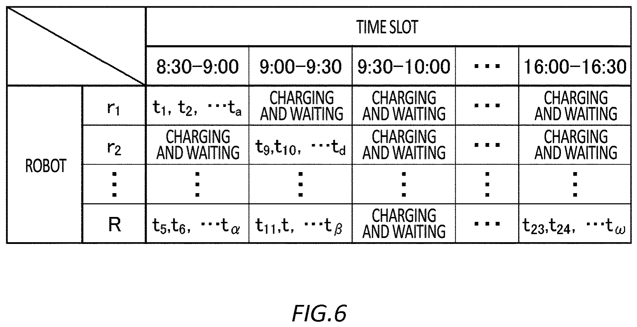

Fig. 6 illustrates another example of a result of the task allocation executed by the apparatus 100 according to the embodiment. The present figure illustrates the task allocation in each time slot as an example. For example, in the time slot of 8:30 to 9:00, tasks having respective identification numbers "t₁","t₂", ..."tₐ" are allocated to the robot 20 having an identification number of "r₁", no task is allocated to the robot 20 having an identification number of "r₂", and tasks having respective identification numbers "t₅", "t₆", ..."t_{α}" may be allocated to the robot 20 having an identification number of "R".

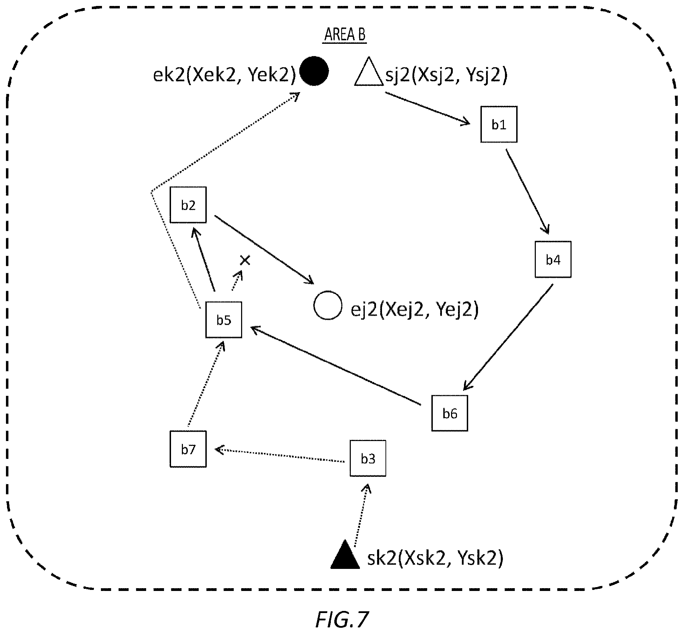

Fig. 7 illustrates an example of an intra-area path decided by the apparatus 100 according to the present embodiment. The present figure illustrates, as an example, an intra-area path of the area B in the time slot 2.

In the present figure, a white triangle indicates a start point position sj2 of the robot 20j in the time slot 2. As described above, the coordinates of the start point position sj2 are decided as (Xsj2, Ysj2). In addition, in the present figure, a white circle indicates an end point position ej2 of the robot 20j in the time slot 2. As described above, the coordinates of the end point position ej2 are decided as (Xej2, Yej2). In addition, as the tasks of the robot 20j in the time slot 2, the tasks b1, b2, b4, b5, and b6 are allocated as described above.

In this case, the intra-area path decision unit 15023 may decide the intra-area path of the robot 20j in the time slot 2 in accordance with the start point position sj2 and the end point position ej2, and the position of each of the tasks b1, b2, b4, b5, and b6. In the present figure, a solid arrow indicates the intra-area path of the robot 20j in the time slot 2. In the present figure, as an example, it is illustrated that in the time slot 2, the robot 20j is to move along the path of the start point position sj2 → the task b1 → the task b4 → the task b6 → the task b5 → the task b2 → the end point position ej2.

The intra-area path decision unit 15023 may decide such an intra-area path in accordance with a predetermined rule. As an example, the intra-area path decision unit 15023 may decide the intra-area path in accordance with a rule of sequentially passing through the position of the closest task, such that the task b1 closest to the start point position sj2 → the task b4 closest to the task b1 → ... the task b2 to the end point position ej2. However, the present invention is not limited to this. The intra-area path decision unit 15023 may decide the intra-area path in accordance with another rule. As an example, the intra-area path decision unit 15023 may decide the intra-area path in accordance with a rule that the total distance of the intra-area path is to be equal to or less than a predetermined threshold (preferably, to be minimum). For example, in this manner, the intra-area path decision unit 15023 may decide the intra-area path in accordance with the start point position s and the end point position e in one time slot.

Similarly, in the present figure, a black triangle indicates the start point position sk2 of the robot 20k in the time slot 2. As described above, the coordinates of the start point position sk2 are decided as (Xsk2, Ysk2). In addition, in the present figure, a black circle indicates the end point position ek2 of the robot 20k in the time slot 2. As described above, the coordinates of the end point position ek2 are decided as (Xek2, Yek2). In addition, as the tasks of the robot 20k in the time slot 2, the tasks b3, b5, and b7 are allocated as described above.

In this case, the intra-area path decision unit 15023 may decide the intra-area path of the robot 20k in the time slot 2 in accordance with the start point position sk2 and the end point position ek2, and the position of each of the tasks b3, b5, and b7. In the present figure, a dotted arrow indicates the intra-area path of the robot 20k in the time slot 2. In the present figure, as an example, it is illustrated that in the time slot 2, the robot 20k is to move along the path of the start point position sk2 → the task b3 → the task b7 → the task b5 → the end point position ek2.

As described above, the task b5 is allocated to both the robot 20j and the robot 20k. In such a case, the intra-area path decision unit 15023 may decide each of the intra-area paths of the robot 20j and the robot 20k such that the robot 20j and the robot 20k are positioned at the position of the task b5 at the same time. As an example, when a common task is allocated to a plurality of target robots, the intra-area path decision unit 15023 may decide each of the intra-area paths of the plurality of target robots such that a value of a cost function having, as a cost, a waiting time for waiting for arrival of another target robot among the plurality of target robots at the position of the common task becomes small (preferably, minimum).

In addition, in the present figure, a cross mark indicates the possibility of collision between a plurality of target robots. As an example, there is a possibility that a path along which the robot 20j moves from the position of the task b2 to the end point position ej2 and a path along which the robot 20k moves from the position of the task b5 to the end point position ek2 cross each other and the robot 20j and the robot 20k pass through the intersection at the same timing. In such a case, for example, the intra-area path decision unit 15023 may change the path, along which the robot 20k moves from the position of the task b5 to the end point position ek2, to a path which does not intersect the path along which the robot 20j moves from the position of the task b2 to the end point position ej2. Note that, in the above description, a case where the intra-area path decision unit 15023 changes the path of any of the robots 20 such that the paths of the plurality of target robots do not intersect with each other has been described as an example, but the present invention is not limited thereto. Even when the paths of the plurality of target robots cross each other, as long as the timing of passing through the intersection is different, there is no possibility of collision. Therefore, the intra-area path decision unit 15023 may change such that any of the target robots is caused to stand by so that the plurality of target robots pass through the intersection at different timings. For example, in this manner, for each of the plurality of target robots, the intra-area path decision unit 15023 may decide the intra-area path so as to avoid a collision with each other. Note that, when the movement altitudes of the plurality of target robots are different from each other and there is no possibility of collision, the intra-area path decision unit 15023 may not execute collision avoidance.

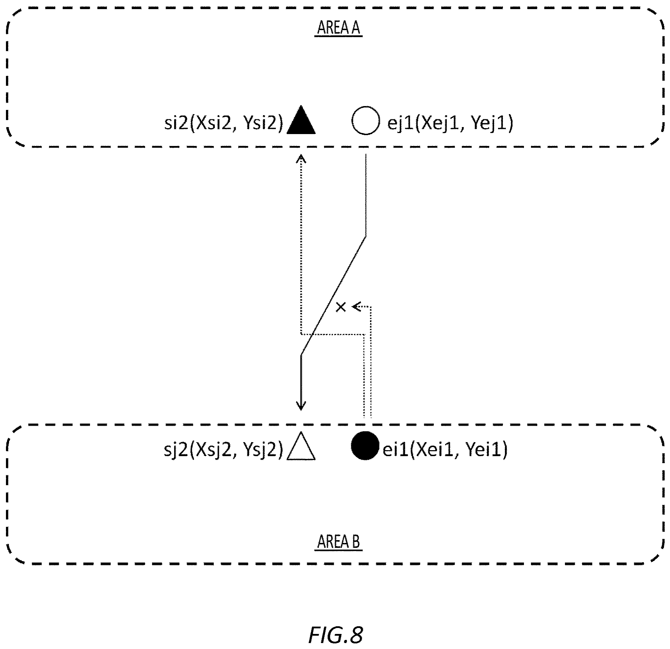

Fig. 8 illustrates an example of an inter-area path decided by the apparatus 100 according to the present embodiment. The present figure illustrates, as an example, an inter-area path between the area A and the area B between the time slot 1 and the time slot 2.

In the present figure, a white circle indicates an end point position ej1 of the robot 20j in the time slot 1. As described above, the coordinates of the end point position ej1 are decided as (Xej1, Yej1). In addition, in the present figure, a white triangle indicates the start point position sj2 of the robot 20j in the time slot 2. As described above, the coordinates of the start point position sj2 are decided as (Xsj2, Ysj2).

In this case, the inter-area path decision unit 15024 may decide the inter-area path of the robot 20j between the time slot 1 and the time slot 2 in accordance with the end point position ej1 in the time slot 1 and the start point position sj2 in the time slot 2. In the present figure, a solid arrow indicates the inter-area path of the robot 20j between the time slot 1 and the time slot 2.

The inter-area path decision unit 15024 may decide such an inter-area path in accordance with a predetermined rule. As an example, the inter-area path decision unit 15024 may specify an obstacle, which may obstruct the movement of the robot 20j, in light of the moving means of the robot 20j based on the specification information and the environment information. Then, the inter-area path decision unit 15024 may decide the inter-area path avoiding the specified obstacle in accordance with a rule that a distance from the end point position ej1 to the start point position sj2 is to be equal to or less than a predetermined threshold (preferably, to be minimum). For example, in this manner, the inter-area path of the robot 20j between the time slot 1 and the time slot 2 may be decided. However, the present invention is not limited to this. The inter-area path decision unit 15024 may decide the inter-area path in accordance with another rule. For example, in this manner, the inter-area path decision unit 15024 may decide the inter-area path in accordance with the end point position e in one time slot and the start point position s in a subsequent time slot.

Similarly, in the present figure, a black circle indicates an end point position ei1 of the robot 20i in the time slot 1. As described above, the coordinates of the end point position ei1 are decided as (Xei1, Yei1). In addition, in the present figure, a black triangle indicates a start point position si2 of the robot 20i in the time slot 2. As described above, the coordinates of the start point position si2 are decided as (Xsi2, Ysi2).

In this case, the inter-area path decision unit 15024 may decide the inter-area path of the robot 20i between the time slot 1 and the time slot 2 in accordance with the end point position ei1 in the time slot 1 and the start point position si2 in the time slot 2. In the present figure, a dotted arrow indicates the inter-area path of the robot 20i between the time slot 1 and the time slot 2.

In addition, in the present figure, a cross mark indicates the possibility of collision between a plurality of robots 20 moving between the same areas. As an example, there is a possibility that a path along which the robot 20j moves from the end point position ej1 to the start point position sj2 and a path along which the robot 20i moves from the end point position ei1 to the start point position si2 cross each other and the robot 20j and the robot 20i pass through the intersection at the same timing. In such a case, the inter-area path decision unit 15024 may change the path of the robot 20i such that the plurality of robots pass through the intersection at different timings. Note that the collision avoidance in the inter-area path decision unit 15024 may also be executed in accordance with various rules, similarly to the intra-area path decision unit 15023. For example, in this manner, for each of the plurality of robots 20, the inter-area path decision unit 15024 may decide the inter-area path so as to avoid a collision with each other.

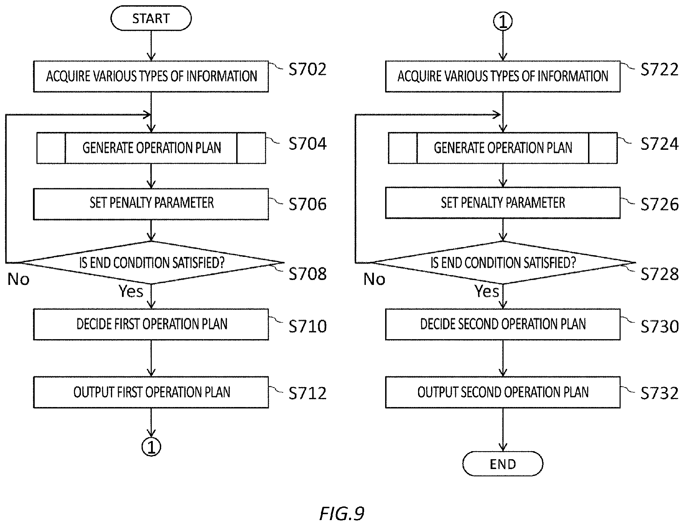

Fig. 9 illustrates an example of a flow diagram of a method executed by the apparatus 100 according to the present embodiment. Each step in the method may be executed by a computer as an operator. However, it is sufficient if the computer primarily serves as the operator in each step, and a case may be included where an entity other than the computer executes a part which is not a main part. The same applies to other flow diagrams.

At step S702, the apparatus 100 acquires various types of information. The acquisition process unit 1501 may acquire various types of information for building the operation plan in the first operation period. As an example, the acquisition process unit 1501 may acquire inspection criterion information, specification information, task information, environment information, execution feasibility information, and external information, as illustrated in Fig. 3. In the present embodiment, the acquisition process unit 1501 may acquire information stored in advance in the storage unit 110. As the execution feasibility information, information manually created in advance by considering a specification of the robot 20, a requirement of the task, an environment of the facility 10, and the like may be stored in advance in the storage unit 110.

At step S704, the apparatus 100 generates an operation plan. The generation process unit 1502 may generate a candidate of an operation plan in which a plurality of tasks are executed by the plurality of robots 20. The generation process unit 1502 may generate a first operation plan for a first operation period and may generate one first operation plan each time the step S704 is performed.

The generation process unit 1502 may generate an operation plan by allowing at least one task not to be executed. In the present embodiment, as an example, the generation process unit 1502 may generate an operation plan such that a number of at least one task not to be executed, i.e., a number of at least one non-allocated task is any value between 0 and M. As an example, the generation process unit 1502 may generate an operation plan by incrementing the number of at least one non-allocated task from 0 to M each time the step S730 is performed by a criterion number of times and may generate the operation plan by randomly deciding the number of at least one non-allocated task within a range of 0 to M. M may be a value defined in advance as an upper limit of the number of at least one non-allocated task. Instead, M may be a total number of tasks. Details of step S704 will be described below.

At step S706, the apparatus 100 sets a penalty parameter for each task. For example, the setting process unit 1504 may set the penalty parameter for each task to a value that is larger as the priority of the task is higher. As an example, when the priority of the task is set in a numeric value, the setting process unit 1504 may set the numeric value of the priority as itself as the penalty parameter.

At step S708, the apparatus 100 determines whether an end condition is satisfied for generation of the operation plan. The decision process unit 1503 may determine whether the end condition that a criterion number of operation plans are generated is satisfied. The criterion number may be set in advance to any value. When it is determined that the end condition is not satisfied, step S708; No, the process may proceed to step S704 described above. When it is determined that the end condition is satisfied, step S708; Yes, the process may proceed to step S710.

At step S710, the apparatus 100 decides the first operation plan from the generated operation plans. The decision process unit 1503 may decide the first operation plan in which the value of the objective function satisfies a reference condition among the generated first operation plans by using the objective function described above. The decision process unit 1503 may calculate a value of an objective function for each of the first operation plans generated at step S704, and decide the first operation plan in which the value of the objective function is minimum. The decision process unit 1503 may calculate the objective function of each first operation plan by imposing, on the objective function, a penalty corresponding to a penalty parameter of a task not to be executed among the penalty parameters that are set for respective tasks.

At step S712, the apparatus 100 outputs a first operation plan. The output unit 160 may output at least some of the area allocation, the task allocation, the intra-area path, and the inter-area path in the first operation plan. As an example, the output unit 160 may output all of the area allocation, the task allocation, the intra-area path, and the inter-area path in the first operation plan.

At step S722, the apparatus 100 acquires various types of information. The acquisition process unit 1501 may acquire various types of information for building the operation plan for a next operation period after the first operation period, i.e., a second operation period, similarly to step S702 described above. The task information acquired at step S722 may include information of a new task that is not acquired at step S702. The task information acquired at step S722 may not include information of a task executed by the first operation plan and may include information of a task not to be executed in the first operation plan. The process of step S722 may be performed before an execution of the first operation plan decided at step S710, may be performed during the execution or may be performed after the execution.

At step S724, the apparatus 100 generates a next operation plan, i.e., a second operation plan. The generation process unit 1502 may generate a candidate for the second operation plan in which a plurality of tasks are executed by the plurality of robots 20 for the second operation period, similarly to step S704 described above. The generation process unit 1502 may generate a second operation plan for the plurality of tasks for which the task information is acquired at step S722 and may generate the second operation plan for a plurality of new tasks including tasks not to be executed in the first operation plan.

At step S726, the apparatus 100 sets a penalty parameter for each task. Similarly to Step 706 described above, the setting process unit 1504 may set the penalty parameter for each task to a value that is larger as the priority of the task is higher. The setting process unit 1504 may set the penalty parameter for the task not to be executed in the first operation plan among the tasks for which the task information is acquired at step S702 to have a value larger than when the first operation plan is decided, i.e., greater than the value at step S706. As an example, the setting process unit 1504 may add or multiply the penalty parameter that is set at step S706 by a constant to set it as a new penalty parameter.

At step S728, the apparatus 100 determines whether an end condition is satisfied for generation of the operation plan. The decision process unit 1503 may determine whether the end condition is satisfied similarly to step S708 described above. When it is determined that the end condition is not satisfied, step S728; No, the process may proceed to step S724 described above. When it is determined that the end condition is satisfied, step S728; Yes, the process may proceed to step S730.

At step S730, the apparatus 100 decides the second operation plan from the generated operation plans. The decision process unit 1503 may decide the second operation plan in which the value of the objective function satisfies the reference condition for the generated second operation plan by using the objective function, similarly to step S710 described above.

The apparatus 100 ends this flow in this manner, for example. When generating the operation plan for a third or later operation period, the apparatus 100 may output the third or later operation plan by repeating the process similar to step S722 to S732. Although, in the description above, the end condition for generating an operation plan is described as that a criterion number of operation plans are generated, the end condition may be that the operation plan is generated such that the value of the objective function satisfies the reference condition. In this case, in the process of step S708, S728, the decision process unit 1503 may determine whether the generated first operation plan and second operation plan satisfy the reference condition and determine whether the end condition is satisfied.

By the operations described above, the penalty parameter of the tasks not to be executed in the first operation plan is set to be larger when the first operation plan is decided than when the second operation plan is decided. Therefore, the second operation plan can be decided such that a task that is not to be executed in the first operation plan is more surely executed.

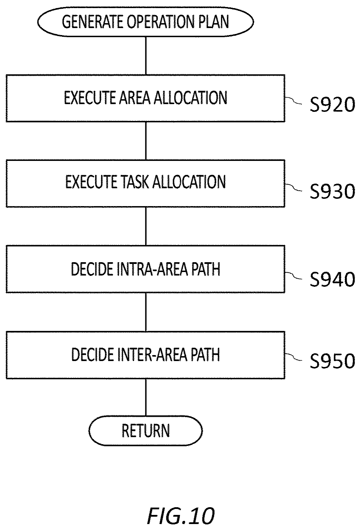

Fig. 10 illustrates an example of a flow diagram of a method executed by the apparatus 100. By the operation illustrated in the present figure, the apparatus 100 may generate an operation plan at steps S704, 724 as described above.

In step S920, the apparatus 100 executes the area allocation. The area allocation unit 15021 of the generation process unit 1502 may execute an area allocation for allocating the plurality of robots 20 to a plurality of areas defined by dividing the facility 10 based on at least part of various types of information acquired at step S702, 722, for example, execution feasibility information, and based on a specification of the plurality of robots 20 and a requirement of the plurality of tasks to be executed in the facility 10 to be operated. As an example, as illustrated in Fig. 4, the area allocation unit 15021 may allocate the robot 20j to the area A, the robot 20i to the area B, and the robot 20k to the area C in the time slot 1. In addition, the area allocation unit 15021 may allocate the robot 20i to the area A and the robot 20j and the robot 20k to the area B in the time slot 2. In addition, the area allocation unit 15021 may allocate the robot 20i and the robot 20k to the area A and the robot 20j to the area B in the time slot 3.

In doing so, in addition to which robot 20 is allocated to which area for each time slot as described above, the area allocation unit 15021 may decide, in the area allocation within one time slot, a start point position s and an end point position e in the time slot of positions for each of the plurality of robots 20 based on a result of the area allocation within another time slot. The area allocation unit 15021 supplies a result of the area allocation to the task allocation unit 15022, the intra-area path decision unit 15023, the inter-area path decision unit 15024, and the decision process unit 1503.

In step S930, the apparatus 100 executes the task allocation. The task allocation unit 15022 of the generation process unit 1502 may allocate a plurality of tasks to be executed to the plurality of robots 20. For a target area which is each of the plurality of areas, the task allocation unit 15022 may execute the task allocation of allocating an intra-area task, which is at least one task that belongs to the target area among the plurality of tasks, to a target robot which is at least one robot allocated to the target area among the plurality of robots 20. As an example, as illustrated in Fig. 5, the task allocation unit 15022 may allocate the tasks b1, b2, b4, b5, b6, and b7 to the robot 20j and allocate the tasks b3, b5, and b7 to the robot 20k in the area B in the time slot 2.

The task allocation unit 15022 may similarly execute the task allocation for other time slots and other areas. Note that such task allocations for other areas are completely independent of each other, and the respective results do not affect each other at all. Therefore, the task allocation unit 15022 can process the task allocations for the plurality of areas in parallel. The task allocation unit 15022 supplies a result of the task allocation to the intra-area path decision unit 15023 and the decision process unit 1503.

Here, the task allocation unit 15022 may not execute the allocation for at least one task among the plurality of tasks to be executed. In the present embodiment, as an example, the task allocation unit 15022 may execute the allocation by setting the number of at least one task not to be executed to any value from 0 to M. As an example, the task allocation unit 15022 may execute the allocation by incrementing the number of at least one non-allocated task from 0 to M each time the operation of the present figure is performed by a criterion number of times and may execute the allocation by randomly deciding the number of at least one non-allocated task within a range of 0 to M. When all tasks cannot be allocated because the number of tasks to be executed is large, the task allocation unit 15022 may not perform the allocation for tasks equal to or larger than a number of at least one task that cannot be allocated. As an example, when the L tasks among tasks to be executed cannot be allocated, the task allocation unit 15022 may execute the allocation by setting the number of at least one task not to be executed to any value from L to L+M.

In step S940, the apparatus 100 decides an intra-area path. For example, the intra-area path decision unit 15023 of the generation process unit 1502 may decide the intra-area path along which the target robot is to be moved within the target area based on the result of the task allocation executed at step S 930. As an example, for the area B in the time slot 2, the intra-area path decision unit 15023 may decide the intra-area path of the robot 20j such that the robot 20j is moved along the path indicated by the solid arrow illustrated in Fig. 7. Similarly, the intra-area path decision unit 15023 may decide the intra-area path of the robot 20k such that the robot 20k is moved along the path indicated by the dotted arrow illustrated in Fig. 7. At this time, as described above, the intra-area path decision unit 15023 may decide the intra-area path in accordance with the start point position s and the end point position e in one time slot. In addition, as described above, for each of the plurality of target robots, the intra-area path decision unit 15023 may decide the intra-area path so as to avoid a collision with each other.

The intra-area path decision unit 15023 may similarly decide an intra-area path for other time slots and other areas. Note that such decisions of the intra-area path for such other time slots and other areas are completely independent of each other, and the respective results do not affect each other at all. Therefore, the intra-area path decision unit 15023 can process the decision of the intra-area paths for a plurality of time slots and a plurality of areas in parallel. The intra-area path decision unit 15023 supplies the intra-area path to the decision process unit 1503.

In step S950, the apparatus 100 decides an inter-area path. For example, the inter-area path decision unit 15024 of the generation process unit 1502 may decide the inter-area path along which the plurality of robots 20 is to be moved between areas among the plurality of areas based on the area allocation executed at step S 920. As an example, the inter-area path decision unit 15024 may decide the inter-area path of the robot 20j between the area A and the area B between the time slot 1 and the time slot 2 such that the robot 20j is moved along the path indicated by the solid arrow illustrated in Fig. 8. Similarly, the inter-area path decision unit 15024 may decide the inter-area path of the robot 20i such that the robot 20i is moved along the path indicated by the dotted arrow illustrated in Fig. 8. At this time, as described above, the inter-area path decision unit 15024 may decide the inter-area path in accordance with the end point position e in one time slot and the start point position s in the subsequent time slot. In addition, as described above, for each of the plurality of robots 20, the inter-area path decision unit 15024 may decide the inter-area path so as to avoid a collision with each other.

The inter-area path decision unit 15024 may similarly decide an inter-area path between other time slots and between other areas. Note that such decisions of the inter-area path between other time slots and between other areas are completely independent of each other, and the respective results do not affect each other at all. Therefore, the inter-area path decision unit 15024 can process the decision of the inter-area paths between a plurality of time slots and between a plurality of areas in parallel. The inter-area path decision unit 15024 supplies the inter-area path to the decision process unit 1503.

The explanation described above illustrates, as an example, a case in which the apparatus 100 executes step S750 after step S730 and S740. However, the present invention is not limited to this. The decision of the inter-area path in step S750, and the result of the task allocation in step S730 and the decision of the intra-area path in step S740 are completely independent of each other, and the respective results do not affect each other at all. Therefore, the apparatus 100 may execute step S750 before steps S730 and S740, or may execute step S750 in parallel with steps S730 and S740.

Conventionally, it is known to build an optimization problem based on various elements, planning strategies, and the like, and solve it to obtain a desired operation plan. However, solving the problem of the operation plan involving the multi-robot system is considered a task, called a NP-hard problem, which requires very high calculation cost, and it is impractical to put into operation. In addition, the calculation cost also depends on the scale of the facility 10 and the number of robots to be introduced, and for example, when a large number of robots are introduced into a large scale facility 10 such as a plant, it is expected that merely implementing a method for reducing a calculation load and obtaining an approximate solution is not sufficient to reach an operational status.

On the other hand, the apparatus 100 according to the present embodiment divides the process into an area allocation, a task allocation, an intra-area path decision, and an inter-area path decision. Thus, according to the apparatus 100 according to the present embodiment, it is possible to solve the operation plan problem involving a plurality of the robots 20, and build a practical operation plan.

In particular, as described above, the task allocations for different areas are independent of each other. Therefore, the apparatus 100 according to the present embodiment can process the task allocations for a plurality of areas in parallel. Similarly, the decisions of intra-area paths for different time slots and different areas are independent of each other. Therefore, the apparatus 100 according to the present embodiment can process the task allocations for a plurality of time slots and a plurality of areas in parallel. Similarly, the inter-area path decisions between different time slots and between different areas are independent of each other. Therefore, the apparatus 100 according to the present embodiment can process the decisions of the inter-area path between a plurality of time slots and between a plurality of areas in parallel. Thus, according to the apparatus 100 according to the present embodiment, it is possible to quickly solve the operation plan problem and build a practical operation plan in a practical calculation time regardless of the scale of the facility 10 and the number of robots 20.

In the area allocation within one time slot, the apparatus 100 according to the present embodiment can decide a start point position and an end point position in the time slot of positions for each of the plurality of robots 20 based on the result of the area allocation in another time slot. Thus, according to the apparatus 100 according to the present embodiment, since the start point position s and the end point position e are decided by the area allocation process, the task allocation process, the intra-area path decision process, and the inter-area path decision process can be made independent of each other, and flexibility can be given to execution of subsequent processes.

The apparatus 100 according to the present embodiment can also decide the intra-area path in accordance with the start point position s and the end point position e in one time slot. Thus, according to the apparatus 100 according to the present embodiment, since the result of the area allocation is followed when deciding the intra-area path, consistency of the operation plan can be secured.

In addition, the apparatus 100 according to the present embodiment can also decide the inter-area path in accordance with the end point position e in one time slot and the start point position s in the subsequent time slot. Thus, according to the apparatus 100 according to the present embodiment, since the result of the area allocation is followed when deciding the inter-area path, consistency of the operation plan can be secured.

In addition, the apparatus 100 according to the present embodiment can also decide at least any of the intra-area path or the inter-area path so as to avoid a collision between the robots 20. Thus, according to the apparatus 100 according to the present embodiment, even when it is necessary to allocate a path to each of the plurality of robots 20, it is possible to avoid interference between the robots 20 and to prevent the operation from not proceeding as planned due to the interference.

In addition, the apparatus 100 according to the present embodiment can also output, as the operation plan, at least any of the area allocation, the task allocation, the intra-area path, or the inter-area path. Thus, according to the apparatus 100 according to the present embodiment, since a part or an entirety of the plan for operating the facility 10 by the multi-robot system can be known to a user or another system, it is possible to reduce the load of the user or another system.

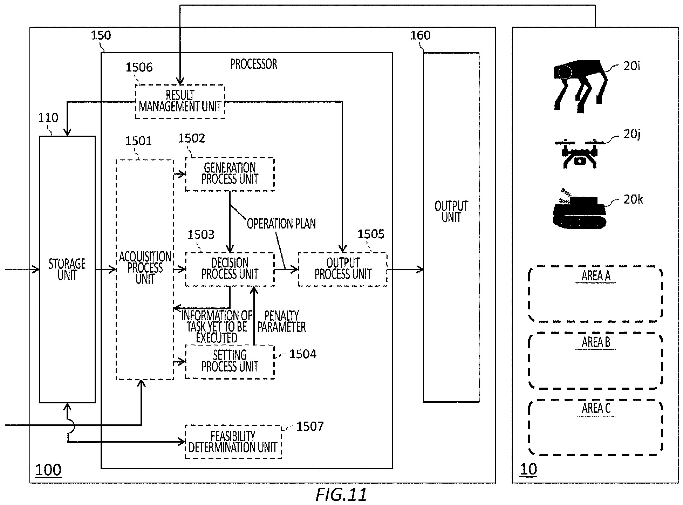

Fig. 11 illustrates an example of a block diagram of the apparatus 100 according to a first variant of the present embodiment along with the facility 10 to be operated. In the present figure, components having the same functions and configurations as those of Fig. 1 are denoted by the same reference numerals, and descriptions thereof will be omitted below except for different points. In the embodiment described above, a case where the apparatus 100 stores the execution feasibility information manually created in advance has been described as an example, but in the present variant, the apparatus 100 itself determines the execution feasibility. The apparatus 100 according to the present variant further includes a feasibility determination unit 1507 in addition to the functional units included in the apparatus 100 according to the embodiment described above. The feasibility determination unit 1507 may be implemented by the processor 150 executing the program in the storage unit 110.

The feasibility determination unit 1507 determines execution feasibility indicating whether one or more robots can execute one or more tasks based on the specification information indicating specifications of one or more robots among the plurality of robots 20 and the task information indicating the requirements of one or more tasks among the plurality of tasks. In particular, the feasibility determination unit 1507 may access the storage unit 110 and determine the execution feasibility indicating whether each of the plurality of robots 20 can execute each of the plurality of tasks based on the specification information indicating the specifications of each of the plurality of robots 20 and the task information indicating the requirements of the plurality of tasks. As an example, for a task having an item of sound collection, the feasibility determination unit 1507 may determine that the robot 20i and the robot 20k equipped with microphones can execute the task, while determining that the robot 20j equipped with no microphone cannot execute the task. Similarly, for a task having an item of imaging, it may be determined that the robot 20i and the robot 20j equipped with cameras can execute the task, while it may be determined that the robot 20k equipped with no camera cannot execute the task. Similarly, for a task having an item of operation of a valve, it may be determined that the robot 20k equipped with an arm can execute the task, while it may be determined that the robot 20i and the robot 20j equipped with no arm cannot execute the task.

In addition, the feasibility determination unit 1507 may determine the execution feasibility further based on the environment information indicating the environment of the facility 10 for each area to which each of the plurality of tasks belongs. As an example, for a task that belongs to an area where a radiation dose is equal to or greater than a threshold, it may be determined that the robot 20k having anti-explosion resistance can execute the task, while it may be determined that the robot 20i and the robot 20j having no anti-explosion resistance cannot execute the task. Similarly, for a task positioned beyond a step of 30 cm, it may be determined that the robot 20j in which a moving means is flying and the robot 20k capable of climbing over a step of 50 cm or less can execute the task, while it may be determined that the robot 20i capable of climbing over only a step of 20 cm or less cannot execute the task.

For each of the plurality of tasks, the feasibility determination unit 1507 may determine the execution feasibility from a plurality of viewpoints. At this time, when the execution feasibility is different for each viewpoint, the feasibility determination unit 1507 is only required to take a logical product of results of determining that execution is possible. For example, for a task which has an item of sound collection and belongs to an area where a radiation dose is equal to or greater than the threshold, the feasibility determination unit 1507 may determine that the robot 20k equipped with a microphone and having anti-explosion resistance can execute the task, while the feasibility determination unit 1507 may determine that the robot 20i equipped with a microphone but having no anti-explosion resistance cannot execute the task.

For example, the feasibility determination unit 1507 may supply the determination result of determining the execution feasibility in this manner to the storage unit 110. The storage unit 110 may store, as the execution feasibility information, the determination result supplied from the feasibility determination unit 1507. Then, the area allocation unit 15021 may execute the area allocation based on the execution feasibility determined by the feasibility determination unit 1507.

As described above, the apparatus 100 according to the present variant determines whether each of the plurality of robots 20 can execute each of the plurality of tasks based on the specification information and the task information. Thus, according to the apparatus 100 according to the present variant, it is possible to avoid manually creating the execution feasibility information, and thus, it is possible to reduce the manpower for determining the execution feasibility, and to build the operation plan based on the objective execution feasibility information without depending on the deviation of the determination criterion or a determination error.

In addition, the apparatus 100 according to the present variant can also determine the execution feasibility further based on the environment information for each area to which each of the plurality of tasks belongs. Thus, according to the apparatus 100 according to the present variant, since the execution feasibility is determined based on not only the specifications of the robot 20 and the requirements of the task but also the environment for each area where the task is positioned, the execution feasibility can be determined according to an actual use environment.

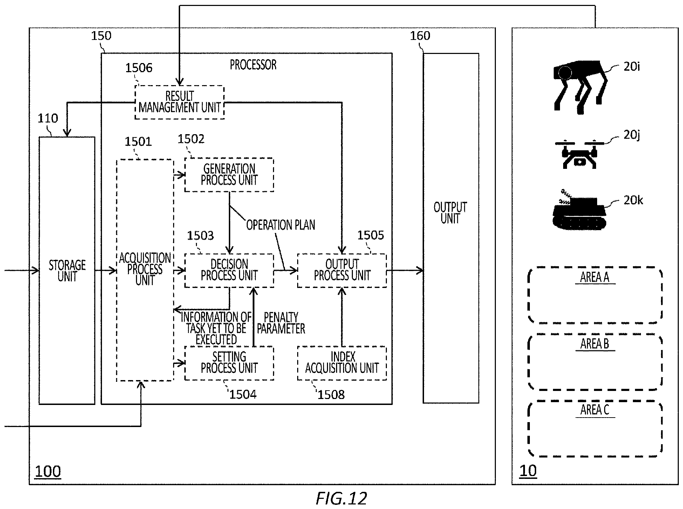

Fig. 12 illustrates an example of a block diagram of the apparatus 100 according to a second variant of the present embodiment along with the facility 10 to be operated. In the present figure, components having the same functions and configurations as those of Fig. 1 and Fig. 11 are denoted by the same reference numerals, and descriptions thereof will be omitted below except for different points. Although the embodiments and variants described above illustrate a configuration until the apparatus 100 outputs the operation plan as an example, the apparatus 100 further acquires an index obtained by evaluating the output operation plan and outputs this in the present variant. The apparatus 100 according to the present variant further includes an index acquisition unit 1508 in addition to the functional units included in the apparatus 100 according to the embodiment described above. The index acquisition unit 1508 may be implemented by the processor 150 executing the program in the storage unit 110. The apparatus 100 according to the present variant may further include the feasibility determination unit 1507 in the first variant.

The index acquisition unit 1508 acquires an index obtained by evaluating the operation plan in accordance with a predetermined criterion. At this time, as an example, the index acquisition unit 1508 may acquire an index obtained by evaluating the operation plan in light of the running cost of the robot 20, the operation rate of the robot 20, a total operation time, and the like. Note that the index acquisition unit 1508 may acquire an index evaluated by itself using an evaluation formula or an evaluation model, may acquire an index evaluated by another system, or may acquire an index evaluated manually. The index acquisition unit 1508 may acquire, as an index, a value of the objective function calculated for the operation plan decided by the decision process unit 1503. In this case, the index acquisition unit 1508 may acquire the value of the objective function from the decision process unit 1503. The index acquisition unit 1508 supplies the acquired index to the output process unit 1505 and outputs it via the output unit 160.

As described above, the apparatus 100 according to the present variant acquires and outputs the index obtained by evaluating the operation plan. Thus, according to the apparatus 100 according to the present variant, it is possible to inform the user or another system not only of the built operation plan but also of how highly the operation plan is evaluated.

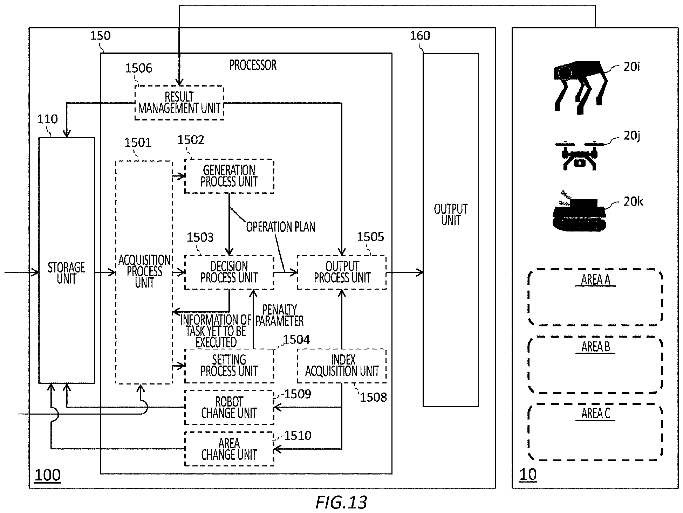

Fig. 13 illustrates an example of a block diagram of the apparatus 100 according to a third variant of the present embodiment along with the facility 10 to be operated. In the present figure, components having the same function and configuration as in Fig. 12 are given the same reference numerals, and the following describes only differing points. In the variant described above, a configuration until the apparatus 100 outputs the index has been described as an example, but in the present variant, the apparatus 100 further changes at least any of the combination of the robots 20 or the division of the facility 10 into a plurality of areas based on the output index.

In other words, a case where the apparatus 100 builds the operation plan on a premise that the combination of the robots 20 is fixed (in the above description, it has already been decided to introduce three robots 20 of the robot 20i, the robot 20j, and the robot 20k into the facility 10) and the division of the facility 10 into the plurality of areas is fixed (in the above description, the facility 10 is divided in advance into three areas, which are the area A, the area B, and the area C) has been described so far. However, in the present variant, the apparatus 100 changes at least any of these based on the output index. The apparatus 100 according to the present variant further includes a robot change unit 1509 and an area change unit 1510 in addition to the functional units included in the apparatus 100 according to the variant described above. The robot change unit 1509 and the area change unit 1510 may be implemented by executing the program in the storage unit 110 by the processor 150. The apparatus 100 according to the present variant may further include the feasibility determination unit 1507 in the first variant. In the apparatus 100 according to the present variant, the index acquisition unit 1508 supplies the index to the robot change unit 1509 and the area change unit 1510.

The robot change unit 1509 changes at least one of the number or the specifications of the plurality of robots 20 based on the index obtained by evaluating the operation plan in accordance with the predetermined criterion. At this time, for example, the robot change unit 1509 may change only the number of robots 20 to be introduced into the facility 10, may change only the specifications of the robots to be introduced into the facility 10 without changing the number, or may change both the number and the specifications. As an example, when the total operation time is long and the index does not satisfy the predetermined criterion, the robot change unit 1509 may increase the number of the robots 20 to be introduced into the facility 10. At this time, for example, the robot change unit 1509 may add a robot having the same specification as that of an existing robot already included in the plurality of robots 20 (for example, a robot 20i(2) having the same specification as that of the robot 20i), or may add a new robot (for example, a robot 201) having a specification different from that of the existing robot. In addition, when the operation rate of one robot 20 is extremely high and the index does not satisfy the predetermined criterion, the robot change unit 1509 may change the specification of the robot to be introduced into the facility 10. At this time, for example, the robot change unit 1509 may change at least one of existing robots already included in the plurality of robots 20 to a robot having the same specification as that of another existing robot (for example, change the robot 20i to a robot 20j(2) having the same specification as that of the robot 20j), or may change the at least one to a new robot having a different specification from that of the existing robot (for example, change the robot 20i to the robot 201).

When at least one of the number or the specifications of the plurality of robots 20 is changed, the robot change unit 1509 notifies the storage unit 110 of the change. In response to this, the storage unit 110 updates the stored information on the robot 20 (for example, specification information) with new information on the plurality of robots 20. The generation process unit 1502 generates an operation plan anew and the decision process unit 1503 decides an operation plan to be executed. For example, in the generation process unit 1502, as an example, the area allocation unit 15021 re-allocates a new plurality of robots 20, for which at least one of a number or a specification has changed, to a plurality of areas. In response to this, the task allocation unit 15022 re-executes the task allocation, the intra-area path decision unit 15023 re-decides the intra-area path, and the inter-area path decision unit 15024 re-decides the inter-area path. The apparatus 100 rebuilds the operation plan for example in this manner, and the output unit 160 outputs the rebuilt operation plan.

The area change unit 1510 changes at least one of the number of areas or the boundary of the plurality of areas based on the index obtained by evaluating the operation plan in accordance with the predetermined criterion. At this time, for example, the area change unit 1510 may change only the number of areas, may change only the boundary without changing the number of areas, or may change both the number of areas and the boundary. As an example, when the total operation time is long and the index does not satisfy the predetermined criterion, the area change unit 1510 may increase the number of areas. At this time, for example, the area change unit 1510 may change a plurality of areas so as to re-divide the facility 10, which has been divided into three areas, into four areas. In addition, when the operation rate of one robot 20 is extremely high and the index does not satisfy the predetermined criterion, the area change unit 1510 may change the boundary for dividing the facility 10 into the plurality of areas. At this time, for example, the area change unit 1510 may change all of the boundary to re-divide the facility 10 into three areas of an area D, an area E, and an area F, or may change a part of the boundary to re-divide the facility 10 into three areas of the area A, the area D, and the area E.

When at least one of the number of areas or the boundary of the plurality of areas is changed, the area change unit 1510 notifies the storage unit 110 of the change. Note that such a notification may include information indicating the position of the boundary. In response to this, the storage unit 110 reorganizes the stored task information for each of a plurality of new areas, and updates the intra-area task. Then, the area allocation unit 15021 re-allocates the plurality of robots 20 to the plurality of new areas of which at least one of the number of areas or the boundary has been changed. In response to this, the task allocation unit 15022 re-executes the task allocation, the intra-area path decision unit 15023 re-decides the intra-area path, and the inter-area path decision unit 15024 re-decides the inter-area path. The apparatus 100 rebuilds the operation plan for example in this manner and the output unit 160 outputs the rebuilt operation plan according to a new plurality of areas.

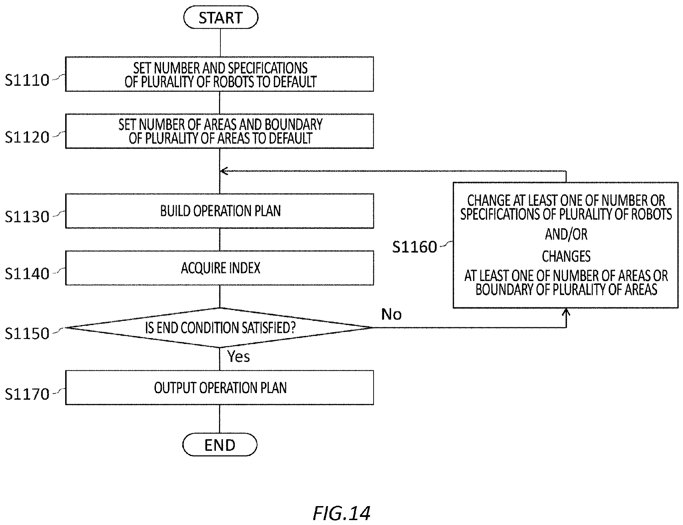

Fig. 14 illustrates an example of a flow diagram of a method executed by the apparatus 100 according to the third variant of the present embodiment to repeatedly build the operation plan.

In step S1110, the apparatus 100 sets the number and specifications of the plurality of robots 20 to default. As an example, the apparatus 100 may set the plurality of robots 20 as three robots 20 of the robot 20i, the robot 20j, and the robot 20k. In response to this, the storage unit 110 may store, as the specification information, information indicating the specification of each of the robot 20i, the robot 20j, and the robot 20k.

In step S1120, the apparatus 100 sets the number of areas and the boundary of the plurality of areas to default. As an example, the apparatus 100 may set the plurality of areas such that facility 10 is divided into three areas of the area A, the area B, and the area C. In response to this, the storage unit 110 organizes the stored task information for each of the area A, the area B, and the area C, and stores it as an intra-area task for each of the area A, the area B, and the area C.

In response to this, the storage unit 110 may update the execution feasibility information. At this time, the storage unit 110 may update the execution feasibility information to be stored to information created manually, or may update the execution feasibility information based on the determination result obtained by the re-determination of the feasibility determination unit 1507.

In step S1130, the apparatus 100 builds an operation plan. The building of the operation plan is as described above. As an example, the building of the operation plan may be performed by a process from step S704 to step S710, or alternatively from step S724 to step S730, described above.

In step S1140, the apparatus 100 acquires an index. The acquisition of the index is also as described above.

In step S1150, the apparatus 100 determines whether an end condition is satisfied. For example, the apparatus 100 determines whether the index acquired in step S1140 satisfies a predetermined criterion. When it is determined that the index does not satisfy the predetermined criterion ("No"), the apparatus 100 proceeds to the process to step S1160.

In step S1160, the apparatus 100 changes at least one of the number or specifications of the plurality of robots 20, and/or changes at least one of the number of areas or the boundary of the plurality of areas. At this time, as described above, the robot change unit 1509 may change only the number of robots 20 to be introduced into the facility 10, may change only the specifications of the robots to be introduced into the facility 10 without changing the number, or may change both the number and the specifications. In addition, at this time, as described above, the area change unit 1510 may change only the number of areas of the plurality of areas, may change the boundary without changing the number of areas, or may change both the number of areas and the boundary.

Then, the apparatus 100 returns the process to step S1130 and continues the flow. In other words, the apparatus 100 updates various types of information stored in the storage unit 110, and rebuilds the operation plan based on new information.

When it is determined in step S1150 that the index satisfies the predetermined criterion ("Yes"), the apparatus 100 proceeds to the process to step S1170.

In step S1170, the apparatus 100 outputs an operation plan. For example, the output unit 160 outputs an operation plan for which it is determined that the index satisfies a predetermined reference at step S1150.

Note that, in the above description, a case where in step S1150, the apparatus 100 determines whether the end condition is satisfied, depending on whether the index satisfies the predetermined criterion has been described as an example, but the present invention is not limited thereto.

In step S1150, the apparatus 100 may determine whether the end condition is satisfied, depending on whether the number of times of building the operation plan has reached a predetermined number of times. Alternatively, in step S1150, the apparatus 100 may determine whether the end condition is satisfied, depending on whether an elapsed time from the start of this flow has reached a predetermined time. In this case, the apparatus 100 may repeat the building of the operation plan and the acquisition of the index a plurality of times while executing the reconfiguration of the robot 20/the re-division of the facility 10 according to a predetermined rule or randomly, regardless of whether the index satisfies the criterion. Then, the apparatus 100 may select the operation plan, which has become the best regarding the index, from a plurality of operation plans built until the end condition is satisfied and output the selected operation plan.

As described above, the apparatus 100 according to the present variant changes at least one of the number or the specification of a plurality of robots 20 based on the index obtained by evaluating the operation plan, rebuilds the operation plan, and outputs the rebuilt operation plan. Thus, according to the apparatus 100 according to the present variant, it is possible to determine the suitable number or specifications of the plurality of robots 20 by repeatedly solving the operation plan problem while adjusting the number or the specifications of the robots 20.

In addition, the apparatus 100 according to the present variant changes at least one of the number of areas or boundary of the plurality of areas based on the index obtained by evaluating the operation plan, rebuilds the operation plan, and outputs the rebuilt operation plan. Thus, according to the apparatus 100 according to the present variant, it is possible to determine the suitable number of areas or boundary of the plurality of areas by repeatedly solving the operation plan problem while adjusting the number of areas or the boundary. As described above, the apparatus 100 according to the present variant can determine the number or specifications of the robots 20 and how to suitably set the number of areas or the boundary. Thus, according to the apparatus 100 according to the present variant, it is possible to reduce man-hours for setting and to clarify whether the setting is suitable.

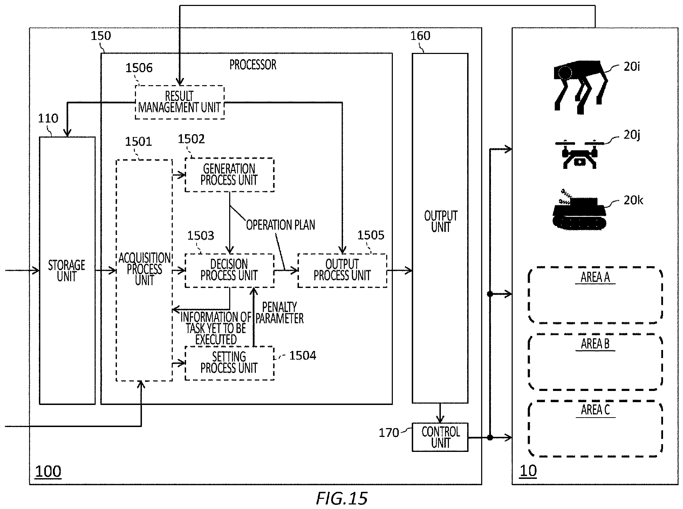

Fig. 15 illustrates an example of a block diagram of the apparatus 100 according to a fourth variant of the present embodiment along with the facility 10 to be operated. In the present figure, components having the same functions and configurations as those of Fig. 1 and Fig. 11 to Fig. 13 are denoted by the same reference numerals, and descriptions thereof will be omitted below except for different points. Although the embodiments and variants described above illustrate a configuration until the apparatus 100 outputs the operation plan as an example, the apparatus 100 further controls the plurality of robots 20 according to the output operation plan in the present variant. The apparatus 100 according to the present variant further includes a control unit 170 in addition to the functional units included in the apparatus 100 according to the embodiment described above. The apparatus 100 according to the present variant may further include the feasibility determination unit 1507 in the first variant, the index acquisition unit 1508 in the second variant, or the robot change unit 1509 and the area change unit 1510 in the third variant. In the apparatus 100 according to the present variant, the output unit 160 outputs the operation plan to at least the control unit 170.

The control unit 170 controls the plurality of robots 20 in accordance with the operation plan. As described above, the operation plan output from the output unit 160 may include at least any of the area allocation, the task allocation, the intra-area path, and the inter-area path. Therefore, the control unit 170 may control the plurality of robots 20 such that a target robot is arranged in a target area in accordance with the area allocation. In addition, the control unit 170 may control the plurality of robots 20 such that the target robot executes the intra-area task in accordance with the task allocation. The control unit 170 may cause the robot 20 to execute the task in the execution procedure generated by the approach described in Non-Patent Document 2 described above. In addition, the control unit 170 may control the plurality of robots 20 such that the target robot moves in the area in accordance with the intra-area path. In addition, the control unit 170 may control the plurality of robots 20 such that the plurality of robots 20 move between areas in accordance with the inter-area path.

The term "control" as used herein may include the indirect control of the robot 20 by controlling a controller which controls the robot 20, in addition to the direct control of the robot 20.

As described above, the apparatus 100 according to the present variant controls the plurality of robots 20 in accordance with the operation plan. Thus, the apparatus 100 according to the present variant is used not only to build the operation plan but also to function as a control apparatus, and thus, it is possible to apply the built operation plan to actual control.

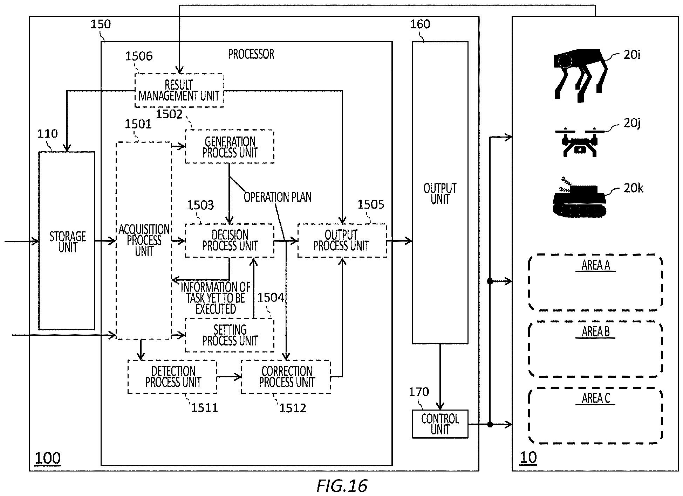

Fig. 16 illustrates an example of a block diagram of an apparatus 100 according to the second embodiment along with a facility 10 to be operated. In the present figure, components having the same functions and configurations as those of Fig. 1, Fig. 11 to Fig. 13, and Fig. 15 are denoted by the same reference numerals, and descriptions thereof will be omitted below except for different points. Although, in the embodiments and variants described above, there is shown, as an example, the configuration of the apparatus 100 that builds the operation plan in which a task for which task information is acquired in advance is executed, the apparatus 100 corrects the operation plan in response to the generation of an interrupting task in the present embodiment. The apparatus 100 according to the present embodiment further includes a detection process unit 1511 and a correction process unit 1512 In addition to the functional units included in the apparatus 100 according to the embodiments and variants described above. The detection process unit 1511 and the correction process unit 1512 may be implemented by the processor 150 executing a program in the storage unit 110. In the apparatus 100 according to the present variant, the decision process unit 1503 outputs the decided operation plan to at least the correction process unit 1512.

The detection process unit 1511 detects a robot 20 that can execute the interrupting task when the interrupting task occurs that is to be executed by interrupting the execution of the operation plan, which may be the first operation plan as an example. The detection process unit 1511 may detect a first robot 20, which may also be referred to as an interruption-handling robot 20, that satisfies the specification required for the interrupting task and that is positioned within a reference range from the execution position of the interrupting task, among the plurality of robots 20. The reference range may be set to any range such as within 100 m, depending on the movement velocity of the robot 20.

Herein, the interrupting task may be a task having a higher priority than other tasks. The interrupting task may be a task to be executed in a case of emergency, such as when an anomaly has occurred in the facility 10 or when an anomaly will occur in the facility 10. The interrupting task may be a task that is not completed in the time slot in which the task is expected to be completed, such as due to an anomaly in the robot 20.

The occurrence of the interrupting task may be detected by the acquisition process unit 1501 and, in response to the occurrence of the interrupting task, task information of the interrupting task and specification information of each robot 20 may be supplied from the acquisition process unit 1501 to the detection process unit 1511. Thereby, the detection process unit 1511 can detect an interruption-handling robot 20. The detection process unit 1511 may supply identification information of the detected interruption-handling robot 20 to the correction process unit 1512.

The correction process unit 1512 corrects the operation plan that is being executed in response to the occurrence of the interrupting task. The correction process unit 1512 may correct the operation plan that is being executed such that an interruption-handling robot 20 executes the interrupting task in a waiting time of the interruption-handling robot 20 in the operation plan that is being executed, which may be the first operation plan as an example. The waiting time of the interruption-handling robot 20 in the operation plan may be a time when the interruption-handling robot 20 does not execute a task and may be a time having a length equal to or longer than a time required for execution of the interrupting task. The waiting time of the interruption-handling robot 20 may include or may not include the charge time of the interruption-handling robot 20.

When there is no waiting time of the interruption-handling robot 20 in the operation plan that is being executed, the correction process unit 1512 may correct the operation plan such that the interruption-handling robot 20 executes the interrupting task while the plurality of robots 20 execute the plurality of tasks including the interrupting task. The correction process unit 1512 may correct the operation plan such that, while the plurality of robots 20 in the facility 10 execute the plurality of tasks including a task yet to be executed in the operation plan that is being executed and the interrupting task, the interruption-handling robot 20 executes the interrupting task. As an example, the correction process unit 1512 may correct the operation plan such that the interruption-handling robot 20 execute the interrupting task in a tentative waiting time by making the tentative waiting time for the interruption-handling robot 20 by allocating, to another robot 20, any task allocated to the interruption-handling robot 20 in the original operation plan.

The correction process unit 1512 may supply the corrected operation plan to the output process unit 1505. Thereby, the corrected operation plan is executed by the plurality of robots 20 via the output unit 160 and the control unit 170 and the interrupting task is executed by the interruption-handling robot 20.

The apparatus 100 described above detects the interruption-handling robot 20 that satisfies the specification required for the interrupting task and that is positioned within a reference range from an execution position of the interrupting task. Then, the operation plan is corrected such that the interruption-handling robot 20 executes the interrupting task in the waiting time of the interruption-handling robot 20 in the operation plan that is being executed. Therefore, the interrupting task can be executed while the original operation plan is executed.

When there is no waiting time of the interruption-handling robot 20 in the operation plan that is being executed, the operation plan is corrected such that the interrupting task is executed by the interruption-handling robot 20 while the plurality of robots 20 executes the plurality of tasks including the interrupting task. Therefore, the plurality of tasks included in the original operation plan and the interrupting task can be surely executed.

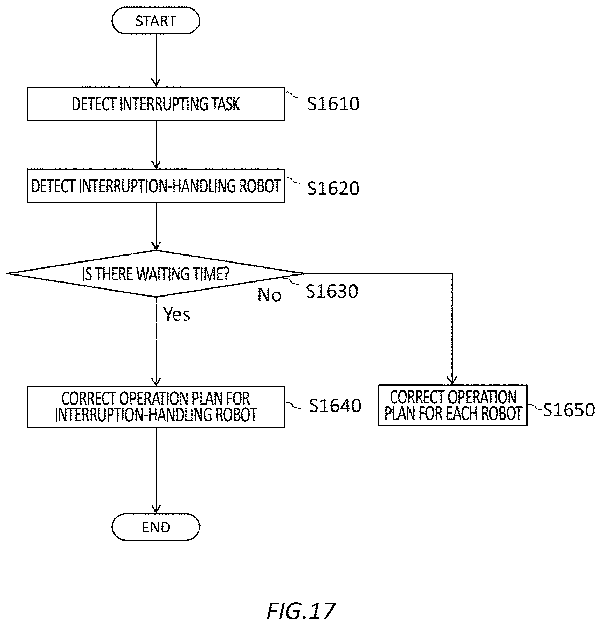

Fig. 17 illustrates an example of a flow diagram of a method in which the apparatus 100 according to the present embodiment executes an interrupting task. The operation in the present figure may be performed in parallel with the operations illustrated in Fig. 9 and Fig. 14 described above and may be started by the occurrence of the interrupting task during the execution of the generated operation plan. In other words, at the time of a start of the operation, the operation plan in which the plurality of robots 20 executes the plurality of tasks is generated in advance and may be being executed.

At step S1610, the apparatus 100 detects an occurrence of the interrupting task. The acquisition process unit 1501 may detect the interrupting task by acquiring task information about the interrupting task from a user or the like.

At step S1620, the apparatus 100 detects an interruption-handling robot 20 for executing the interrupting task. The detection process unit 1511 may detect an interruption-handling robot 20 that satisfies the specification required for the interrupting task and that is positioned within the reference range from the execution position of the interrupting task among the plurality of robots 20 in the facility 10.

The detection process unit 1511 may detect only one interruption-handling robot 20 when the interrupting task is a task to be executed by a single robot 20. As an example, the detection process unit 1511 may detect, as the interruption-handling robot 20, a robot 20 that satisfies the specification required for the interrupting task and that is closest to the execution position of the interrupting task.

The detection process unit 1511 may detect a plurality of interruption-handling robots 20 when the interrupting task is a task to be executed by a plurality of robots. For example, when the interrupting task is a task to be executed by three robots, the detection process unit 1511 may detect three interruption-handling robots 20 that satisfy the specification required for the interrupting task and that are positioned within the reference range from the execution position of the interrupting task.

At step S1630, the apparatus 100 determines whether the interruption-handling robot 20 has a waiting time in the operation plan that is being executed. When the plurality of interruption-handling robots 20 are detected, the correction process unit 1512 may determine whether each of those interruption-handling robots 20 has a waiting time. When it is determined that each interruption-handling robot 20 has a waiting time, step S1630; Yes, the process may proceed to step S1640 and, when it is determined that there is no waiting time, step S1630; No, the process may proceed to step S1650.

When the interrupting task is a task to be simultaneously executed by the plurality of robots 20, the correction process unit 1512 may determine whether each of the interruption-handling robots 20 has a waiting time and the waiting time is a same time within the operation period. In this case, when it is determined that each interruption-handling robot 20 has a waiting time and the waiting time is the same time, the process may proceed to step S1640 and, when it is determined that there is no waiting time or the waiting time is a different time within the operation period, the process may proceed to step S1650.

At step S1640, the apparatus 100 corrects the operation plan for each interruption-handling robot 20. The correction process unit 1512 may correct the operation plan that is being executed such that an interruption-handling robot 20 executes the interrupting task in the waiting time of each interruption-handling robot 20 in the operation plan that is being executed, which may be the first operation plan as an example.

At step S1650, the apparatus 100 corrects the operation plan for each robot 20. The correction process unit 1512 may correct the operation plan such that the interrupting task is executed by each interruption-handling robot 20 while the plurality of robots 20 within the facility 10 execute the plurality of tasks including the interrupting task.

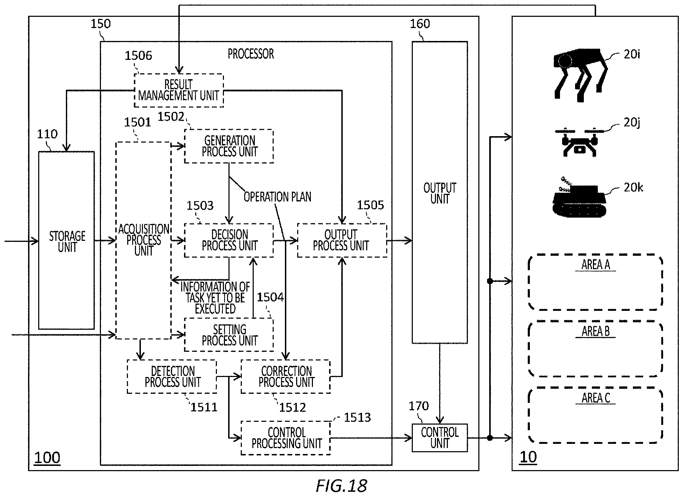

Fig. 18 illustrates an example of a block diagram of an apparatus 100 according to a variant of the present embodiment along with a facility 10 to be operated. In the present figure, components having the same functions and configurations as those of Fig. 1 and Fig. 11 to Fig. 13, Fig. 15, and Fig. 16 are denoted by the same reference numerals, and descriptions thereof will be omitted below except for different points. Although, in an embodiment described above, a case is shown, as an example, in which the interrupting task is executed within the operation plan that is being executed by the apparatus 100, an interrupting task having a higher priority than a reference priority, which may be a highly urgent interrupting task as an example, is executed regardless of the operation plan in the present variant. The apparatus 100 according to the present variant further includes a control processing unit 1513 in addition to the functional units included in the apparatus 100 according to the embodiment described above. The control processing unit 1513 may be implemented by the processor 150 executing the program in the storage unit 110. In the apparatus 100 according to the present variant, the detection process unit 1511 may supply identification information of the detected interruption-handling robot 20 and a priority of the interrupting task to the correction process unit 1512 and the control processing unit 1513.

The control processing unit 1513 causes the interruption-handling robot 20 to execute the interrupting task regardless of the operation plan that is being executed, in response to the priority of the interrupting task being higher than the reference priority. To cause the interruption-handling robot 20 to execute the interrupting task regardless of the operation plan that is being executed may be to execute the interrupting task by the interruption-handling robot 20 independently of the operation plan. In this case, when a task is allocated to the interruption-handling robot 20 at the current point of time in the operation plan, the task may be interrupted and, when a task is allocated to the interruption-handling robot 20 after the current point of time in the operation plan, the task may be in an unexecuted state. The control processing unit 1513 may cause the interruption-handling robot 20 to execute the interrupting task via the control unit 170.

The correction process unit 1512 may perform a process similar to that in the second embodiment described above when the priority of the interrupting task is equal to or lower than the reference priority. The correction process unit 1512 may perform a different process than that in the second embodiment when the priority of the interrupting task is higher than the reference priority, i.e., when the interruption-handling robot 20 executes the interrupting task by the control processing unit 1513 regardless of the operation plan.

The correction process unit 1512 may correct the operation plan that is being executed such that the plurality of robots 20 in the facility 10 execute a task that cannot be executed, which may also be referred to as an inexecutable task, in response to the inexecutable task occurring in the tasks allocated to the interruption-handling robot 20 in the operation plan that is being executed due to the interruption-handling robot 20 executing the interrupting task. The correction process unit 1512 may correct the operation plan such that the plurality of robots 20 other than the interruption-handling robot 20 among the plurality of robots 20 in the facility 10 execute the inexecutable task. As an example, the correction process unit 1512 may correct the operation plan that is being executed such that, the inexecutable task are executed by the robot 20 that is different from the interruption-handling robot 20, that satisfies the specification required for the inexecutable task, and for which the waiting time is provided in the operation plan that is being executed, among the plurality of robots 20 in the facility 10. The inexecutable task may include a task interrupted by the interruption-handling robot 20.

The correction process unit 1512 may perform generation and decision of the operation plan at and after the current point of time similarly to the generation process unit 1502 and the decision process unit 1503, and may perform generation and decision of the operation plan by allowing at least one task other than the interrupting task not to be executed among the plurality of tasks to be executed. The correction process unit 1512 may supply the corrected operation plan to the output process unit 1505.

In the apparatus 100 described above, the interruption-handling robot 20 executes the interrupting task regardless of the operation plan that is being executed in response to a priority of the interrupting task being higher than the reference priority. Therefore, a highly urgent interrupting task can be surely executed.

The operation plan is corrected such that the plurality of robots 20 execute an inexecutable task in response to the inexecutable task occurring in the task allocated to the interruption-handling robot 20 due to the execution of the interrupting task. Therefore, a plurality of tasks included in the original operation plan can be surely executed.

The operation plan that is being executed is corrected to execute the inexecutable task by the plurality of robots 20 other than the interruption-handling robot 20. Therefore, the inexecutable task can be surely executed by the plurality of robots 20 other than the interruption-handling robot 20 that executes the interrupting task.

Although, in the second embodiment and variants described above, a case is described in which an interrupting task occurs that is to be executed by interruption in the operation plan that is being executed, the operation plan may be generated and decided by the generation process unit 1502 and the decision process unit 1503 such that the plurality of robots 20 execute the plurality of tasks including the task as described in the first embodiment, when a task occurs that is to be executed in the next operation plan.

Although, in the second embodiment and variants described above, a case is described in which the generation process unit 1502 generates the operation plan by allowing at least one task not to be executed and the decision process unit 1503 decides which operation plan is to be executed, the generation process unit 1502 may generate and execute the operation plan such that all tasks are executed. In this case, the intra-area path decision unit 15023 and the inter-area path decision unit 15024 of the generation process unit 1502 may sequentially decide a path of the robot 20 in the next time slot without deciding in advance a path of the robot 20 in each time slot of the operation plan.

Although, in the first embodiment, the second embodiment, and the variants described above, the storage unit 110 is described to store various types of information for building the operation plan, the storage unit 110 may further store the operation plan itself. The storage unit 110 may store the operation plan decided by the decision process unit 1503 associated with the task information and specification information used for generating the operation plan. In this case, the decision process unit 1503 may detects, from the storage unit 110, a combination of the task information and specification information that is similar to a combination of the task information and specification information supplied from the acquisition process unit 1501, reads the operation plan associated with the detected task information and specification information, and decides it as a target for use. In this case, the generation process unit 1502 may not perform generation of the operation plan. Thereby, the process cost required for generation and decision of the operation plan is reduced.

Although the acquisition process unit 1501 is described to acquire the charge position and the current location for each robot 20, the acquisition process unit 1501 may acquire any one of the charge position or the current location.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied along with computer-readable instructions stored on computer-readable media, and/or processors supplied along with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory, or RAM, a read-only memory, or ROM, an erasable programmable read-only memory, or EPROM or flash memory, an electrically erasable programmable read-only memory, or EEPROM, a static random access memory, or SRAM, a compact disc read-only memory, or CD-ROM, a digital versatile disk, or DVD, a Blu-ray (registered trademark) disk, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Small talk (registered trademark), JAVA (registered trademark), C++, or the like, and a conventional procedural programming language such as a "C" programming language or a similar programming language.

The computer-readable instruction may be provided for a processor or programmable circuit of a programmable data process apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer, or PC, a tablet computer, a smartphone, a workstation, a server computer, a general-purpose computer, a special purpose computer, or the like, or may be a computer system to which a plurality of computers are connected. Such a computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a process unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multi-tasks, each of the plurality of processors may execute a portion of each task piece by piece by performing task-switching for each time slice. In this case, which portion of one program each processor is responsible for executing dynamically changes. Moreover, which portion of the program each of the plurality of processors is responsible for executing may be determined statically by multiprocessor-aware programming.

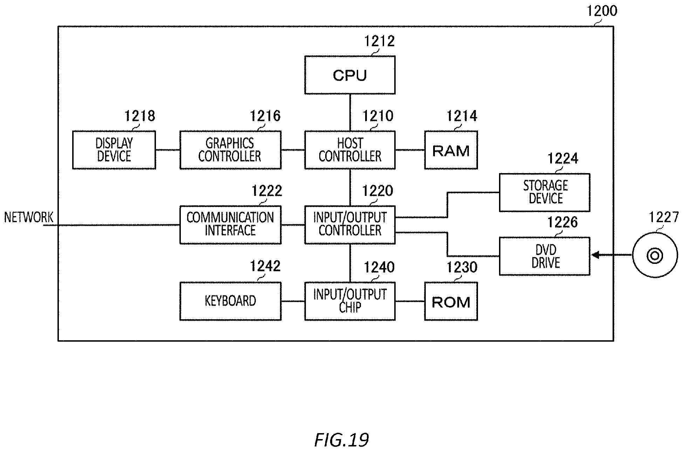

Fig. 19 shows an example of a computer 1200 in which a plurality of aspects of the present invention may be entirely or partially embodied. A program that is installed in the computer 1200 can cause the computer 1200 to function as operations associated with a device according to the embodiment of the present invention or one or more sections in the device, or can cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute particular operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes a communication interface 1222, a storage device 1224 such as a hard disk, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display device 1218.

The communication interface 1222 communicates with other electronic devices via a network. The storage device 1224 stores a program and data used by the CPU 1212 in the computer 1200. The DVD-ROM drive 1226 reads the programs or the data from the DVD-ROM 1227, and provides the programs or the data to the storage apparatus 1224 via the RAM 1214. The IC card drive reads the programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer-readable medium such as the DVD-ROM 1227 or the IC card. The programs are read from the computer-readable medium, are installed in the storage device 1224, the RAM 1214, or the ROM 1230, which are also an example of the computer-readable medium, and are executed by the CPU 1212. Information process written in these programs is read by the computer 1200, and provides cooperation between the programs and the various types of hardware resources described above. An apparatus or method may be constructed by implementing the operation or process of information according to the use of the computer 1200.

For example, when communication is executed between the computer 1200 and an external device, the CPU 1212 may execute a communication program loaded onto the RAM 1214 to instruct communication process to the communication interface 1222, based on the process described in the communication program. The communication interface 1222, under the control of the CPU 1212, reads transmission data stored in a transmission buffering region provided in a recording medium such as the RAM 1214, the storage apparatus 1224, the DVD-ROM 1227, or the IC card, transmits the read transmission data to the network, or writes reception data received from the network to a reception buffering region or the like provided on the recording medium.

The CPU 1212 may enable all or require part of files or a database stored in an external recording medium such as a storage 1224, a DVD-ROM drive 1226 or DVD-ROM 1227, IC card, or the like to be read into the RAM 1214 and execute various types of processes on the data on the RAM 1214. The CPU 1212 may then write back the processed data to the external recording medium.

Various types of information such as various types of programs, data, tables, and databases may be stored in a recording medium and subjected to information process. The CPU 1212 may execute various types of process on the data read from the RAM 1214, which includes various types of operations, information process, conditional judging, conditional branch, unconditional branch, search/replace of information, or the like, as described throughout this disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute satisfying a predetermined condition.

The above-described program or software module may be stored in the computer-readable medium on the computer 1200 or near the computer 1200. In addition, a recording medium such as a hard disk or a RAM provided in a server system connected to a dedicated communication network or the Internet may be used as the computer-readable medium, thereby providing the program to the computer 1200 via the network.

While the present invention has been described above by way of the embodiments, the technical scope of the present invention is not limited to the scope described in the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: facility
20: robot
100: apparatus
110: storage unit
150: processor
160: output unit
170: control unit
1200: computer
1210: host controller
1212: CPU
1214: RAM
1216: graphics controller
1218: display device
1220: input/output controller
1222: communication interface
1224: storage
1226: DVD-ROM drive
1227: DVD-ROM
1230: ROM
1240: input/output chip
1242: keyboard
1501: acquisition process unit
1502: generation process unit
1503: decision process unit
1504: setting process unit
1505: output process unit
1506: result management unit
1507: feasibility determination unit
1508: index acquisition unit
1509: robot change unit
1510: area change unit
1511: detection process unit
1512: correction process unit
1513: control processing unit
15021: area allocation unit
15022: task allocation unit
15023: intra-area path decision unit
15024: inter-area path decision unit.

## Claims

1. An apparatus comprising a processor, wherein
the processor executes:
a generation process for generating an execution plan by allowing at least one task not to be executed, as an execution plan for performing a plurality of tasks by a plurality of robots; and
a decision process for deciding a first execution plan in which a value of an objective function satisfies a reference condition among generated execution plans by using the objective function that imposes a penalty when the execution plan includes a task not to be executed.

2. The apparatus according to Claim 1, wherein the penalty imposed on the objective function is a value corresponding to a parameter of the task not to be executed among parameters which are set for respective tasks.

3. The apparatus according to Claim 2, wherein the processor further executes a setting process for setting a parameter for each task to a value that is larger as a priority of the task is higher.

4. The apparatus according to Claim 3, wherein
the processor
generates a next execution plan by further executing the generation process for a plurality of new tasks including the task not to be executed in the first execution plan,
decides a second execution plan in which a value of an objective function satisfies the reference condition by further executing the decision process for the next execution plan generated, and
in the setting process, makes a parameter larger for the task not to be executed when deciding the second execution plan, compared to when deciding the first execution plan.

5. The apparatus according to any one of Claims 1 to 4, wherein
the processor further executes
an output process for outputting the first execution plan and information indicating the task not to be executed in the first execution plan.

6. The apparatus according to any one of Claims 1 to 5, wherein
the processor further executes:
a first acquisition process for acquiring an execution position for each task; and
a second acquisition process for acquiring at least one of a charge position or a current location for each robot, and
the objective function includes, as a factor, a cost corresponding to a movement distance of each robot when the execution plan is executed.

7. The apparatus according to any one of Claims 1 to 6, wherein
the processor further executes:
a detection process for detecting a first robot that satisfies a specification required for an interrupting task and that is positioned within a reference range from an execution position of the interrupting task among the plurality of robots, when the interrupting task occurs to be executed by interruption during an execution of the first execution plan; and
a first correction process for correcting the first execution plan such that the first robot executes the interrupting task during a waiting time of the first robot in the first execution plan.

8. The apparatus according to Claim 7, wherein
the processor corrects the first execution plan such that the first robot executes the interrupting task while the plurality of robots are executing a plurality of tasks including the interrupting task in the first correction process when the first execution plan includes no waiting time of the first robot.

9. The apparatus according to Claim 7 or 8, wherein
the processor further executes
a control process for causing the first robot to execute the interrupting task regardless of the first execution plan in response to a priority of the interrupting task being higher than a reference priority.

10. The apparatus according to Claim 9, wherein the processor further executes a second correction process for correcting the first execution plan such that the plurality of robots execute an inexecutable task in response to the inexecutable task occurring among tasks allocated to the first robot in the first execution plan due to the first robot executing the interrupting task.

11. The apparatus according to Claim 10, wherein the processor corrects the first execution plan such that the inexecutable task is executed by the plurality of robots other than the first robot in the second correction process.

12. A method comprising:
generating an execution plan by allowing at least one task not to be executed, as an execution plan for executing a plurality of tasks by a plurality of robots; and
deciding a first execution plan in which a value of an objective function satisfies a reference condition among execution plans generated, by using an objective function that imposes a penalty when the execution plan includes a task not to be executed.

13. A program which, when executed by a computer, causes the computer to perform operations comprising:
generating an execution plan by allowing at least one task not to be executed, as an execution plan for performing a plurality of tasks by a plurality of robots; and
deciding a first execution plan in which a value of an objective function satisfies a reference condition among generated execution plans by using an objective function that imposes a penalty when the execution plan includes a task not to be executed.
